# EUROPEAN PATENT APPLICATION

(11) **EP 4 653 946 A1**
(43) Date of publication of application: **26.11.2025**
(21) Application number: 24744795.6
(22) Date of filing: 10.01.2024
(51) Int. Cl.: G03B 17/02, G03B 5/00, G03B 3/10, G03B 13/36, H04N 23/51, H04N 23/54, H04N 23/55, H02K 41/035

(54) **CAMERA ACTUATOR AND CAMERA MODULE COMPRISING SAME**

(30) Priority: 18.01.2023 KR 20230007550; 18.01.2023 KR 20230007554
(71) Applicant: LG INNOTEK CO. LTD, Gangseo-gu Seoul 07796 (KR)
(72) Inventor: HONG, Dong Chan, Seoul 07796 (KR); KIM, Seul A, Seoul 07796 (KR); PARK, Young Bin, Seoul 07796 (KR); OH, Young Sun, Seoul 07796 (KR); LEE, Kap Jin, Seoul 07796 (KR)
(74) Representative: M. Zardi & Co S.A.
(86) International application number: PCT/KR2024/000474
(87) International publication number: WO 2024/155014

(57) **Abstract**

An embodiment of the present invention discloses a camera actuator comprising: a housing; a first lens assembly moving in the optical axis direction inside the housing; a drive unit for moving the first lens assembly; and a first stopper disposed at one end of the housing, wherein the first stopper includes a 1-1 stopper disposed on one side and a 1-2 stopper disposed on the other side, and the 1-1 stopper and the 1-2 stopper come into contact with the first lens assembly when the first lens assembly moves.

## Description

### [Technical Field]

The present invention relates to a camera actuator and a camera module including the same.

### [Background Art]

Cameras are devices which capture photos or videos of subjects and are installed in portable devices, drones, vehicles, and the like. Camera modules may have an image stabilization (IS) function of correcting or preventing the image shaking caused by a user's movement, an auto-focus function of automatically adjusting a gap between an image sensor and a lens to align the focal length of the lens, and a zoom function of increasing or decreasing the magnification of a distant subject using a zoom lens to improve the quality of the images.

Here, there is a problem of the reliability of lenses in camera modules is reduced due to the long movement of the lenses.

### [Disclosure]

### [Technical Problem]

A technical problem to be solved by embodiments of the present invention is to provide a camera actuator and a camera module in which the reliability of a lens assembly and a lens is improved through stoppers.

In addition, embodiments of the present invention may provide a camera actuator and a camera module in which the balance of cracks and impacts of a lens in a lens assembly which moves in an optical axis direction is improved by adjusting the positions of a plurality of stoppers.

Additionally, embodiments of the present invention may provide a camera actuator and a camera module which include a lens assembly having a structure in which drawing is improved.

Embodiments of the present invention provide a camera actuator applicable to ultra-slim, ultra-compact, and high-resolution cameras.

The problems to be solved by the embodiments are not limited thereto, and purposes or effects which may be grasped from solutions or embodiments of the problems to be described below are also included.

### [Technical Solution]

A camera actuator according to an embodiment of the present invention includes: a housing; a first lens assembly which moves in an optical axis direction in the housing; a driving unit which moves the first lens assembly; and a first stopper which is disposed on a first inner wall of the housing, in which the first stopper includes a 1-1 stopper disposed on one side of the first inner wall of the housing and a 1-2 stopper disposed on the other side of the first inner wall of the housing, and when the first lens assembly moves, both the 1-1 stopper and the 1-2 stopper come into contact with the first lens assembly.

The 1-1 stopper and the 1-2 stopper may be arranged spaced apart in a direction perpendicular to the optical axis direction.

The first lens assembly may include: an accommodating portion which has a lens accommodated therein; a guiding unit which comes into contact with the accommodating portion and in which a ball unit is located; and a lens protrusion portion which comes into contact with the accommodating portion and corresponds to the guiding unit.

The guiding unit may be located on one side of the accommodating portion, and the lens protrusion portion may be located on the other side surface of the accommodating portion.

A length of the lens protrusion portion in a direction perpendicular to the optical axis direction may be smaller than a length of the guiding unit in the direction perpendicular to the optical axis direction. The guiding unit and the lens protrusion portion may have different distances from the first inner wall of the housing in optical axis direction. A distance between the 1-1 stopper and the guiding unit of the first lens assembly may correspond to a distance between the 1-2 stopper and the lens protrusion portion.

The first stopper may include a 1-3 stopper which is disposed on the first inner wall of the housing.

The 1-1 stopper, the 1-2 stopper, and the 1-3 stopper may be arranged to be offset in the direction perpendicular to the optical axis direction.

The camera actuator may include: a second lens assembly which moves in the optical axis direction in the housing, in which, when the second lens assembly moves in the optical axis direction, the 1-3 stopper comes into contact with the second lens assembly.

The 1-1 stopper may be located in a region between the 1-3 stopper and the 1-2 stopper.

At least one of the first lens assembly and the second lens assembly may include glass, and the glass may be disposed at the outermost side of at least one of the first lens assembly and the second lens assembly.

The camera actuator may include: a second stopper disposed on a second inner wall facing in the optical axis direction from the first inner wall of the other end in the housing, and the second stopper may include a 2-1 stopper disposed on one side of the second inner wall and a 2-2 stopper disposed on the other side of the second inner wall. A distance between the 2-2 stopper and the second lens assembly may correspond to a distance between the 2-1 stopper and the second lens assembly.

The 2-1 stopper and the 2-2 stopper may overlap in the direction perpendicular to the optical axis direction.

### [Advantageous Effects]

According to embodiments of the present invention, a camera actuator and a camera module in which the reliability of a lens assembly and a lens is improved through stoppers can be implemented.

Furthermore, embodiments of the present disclosure can implement a camera actuator and a camera module in which the balance of cracks and impacts of a lens in a lens assembly which moves in an optical axis direction is improved by adjusting the positions of a plurality of stoppers.

Furthermore, embodiments of the present invention can implement a camera actuator and a camera module which include a lens assembly having a structure in which drawing is improved.

Embodiments of the present invention can implement a camera actuator applicable to ultra-slim, ultra-compact, and high-resolution cameras.

Various useful advantages and effects of the present invention are not limited to the above-described contents, and can be more easily understood in a process of describing specific embodiments of the present invention.

### [Description of Drawings]

FIG. 1 is a perspective view of a camera module according to an embodiment.
FIG. 2 is an exploded perspective view of the camera module according to the embodiment.
FIG. 3 is a view along line AA' in FIG. 1.
FIG. 4 is a perspective view of a second camera actuator according to the embodiment.
FIG. 5 is an exploded perspective view of the second camera actuator according to the embodiment.
FIG. 6 is a cross-sectional view along line DD' in FIG. 4.
FIGS. 7 and 8 are views for describing each driving of a lens assembly according to the embodiment.
FIG. 9 is a view for describing the operation of the second camera actuator according to the embodiment.
FIG. 10 is a perspective view of a part of a configuration of the second camera actuator according to the embodiment.
FIG. 11 is a view showing an optical driving coil, an optical driving magnet, and a yoke according to the embodiment.
FIG. 12 is a view for describing the movement of the optical driving magnet using a driving unit according to the embodiment.
FIG. 13 is a view for describing the movement of second and third lens assemblies according to the embodiment.
FIG. 14 is a perspective view of a first lens assembly, a first coupling member, a second coupling member, and a second lens assembly according to the embodiment.
FIG. 15 is a perspective view of the first lens assembly (or second lens assembly) according to the embodiment.
FIG. 16 is a front view of the first lens assembly (or second lens assembly) according to the embodiment.
FIG. 17 is a side view of the first lens assembly (or second lens assembly) according to the embodiment.
FIG. 18 is a rear view of the first lens assembly (or second lens assembly) according to the embodiment.
FIG. 19 is another side view of the first lens assembly (or second lens assembly) according to the embodiment.
FIG. 20 is a view showing a housing, a guide unit, and stoppers in the second camera actuator according to the embodiment.
FIG. 21 is a perspective view of FIG. 20.
FIG. 22 is a side view of FIG. 20.
FIG. 23 is an enlarged cross-sectional view of FIG. 20.
FIG. 24 is a view for describing the effects of stoppers in the second camera actuator according to the embodiment.
FIG. 25 is a modified example of FIG. 22.
FIG. 26 is a perspective view of an additional member, a fixed assembly, and a first lens group in a second camera actuator according to another embodiment.
FIG. 27 is a schematic view showing a circuit board according to the embodiment.
FIG. 28 is an exploded perspective view of a second camera actuator according to another embodiment.
FIGS. 29, 30, and 31A are perspective views of a main barrel and a trap unit in the second camera actuator according to another embodiment.
FIG. 31B is a perspective view of a main barrel and a trap unit according to the embodiment.
FIG. 31C is a perspective view of FIG. 31B when viewed in another direction.
FIG. 32 is a view of a main barrel, a first lens assembly, a first ball, and a first yoke in the second camera actuator according to another embodiment.
FIG. 33 is an enlarged view of a part of FIG. 32.
FIG. 34 is another enlarged view of FIG. 32.
FIG. 35 is a perspective view of a main barrel and a trap unit of a second camera actuator according to still another embodiment.
FIG. 36 is a perspective view of a main barrel and a trap unit of a second camera actuator according to yet another embodiment.
FIGS. 37 and 38 are perspective views of a main barrel and a trap unit of a second camera actuator according to yet another embodiment.
FIG. 39 is a perspective view of a mobile terminal to which the camera module according to the embodiment is applied.
FIG. 40 is a perspective view of a vehicle to which the camera module according to the embodiment is applied.

### [Modes of the Invention]

The present invention may have various modifications and embodiments and specific embodiments are exemplified in the drawings and described. Here, this is not intended to limit the present invention to specific embodiments, but should be understood to include all modifications, equivalents, or substitutes included in the spirit and technical scope of the present invention.

Although terms that include ordinal numbers such as second and first may be used for describing various components, the components are not limited by these terms. These terms are used only for distinguishing one component from another. For example, without departing from the scope of the present invention, a second component could be named a first constituent, and similarly, the first component could also be named the second component. The term and/or includes any combination of a plurality of related described items or any item among the plurality of related described items.

When it is said that a component is "connected" or "coupled" to another component, although it should be understood that it may be directly connected or coupled to that other component, another component may also be present therebetween. On the other hand, when it is said that any component is "directly connected" or "directly coupled" to another component, it should be understood that another component is not present therebetween.

The terminology used in this application is used only for describing specific embodiments and is not intended to limit the present invention. Singular expressions include plural expressions unless the context clearly indicates otherwise. In this application, it should be understood that terms such as terms "include" or "have" are intended to specify the presence of a feature, a number, a step, an operation, a component, a part or a combination thereof described in the specification, but do not exclude in advance the possibility of the presence or the addition of one or a plurality of other features, numbers, steps, operations, components, parts or combinations thereof.

Unless otherwise defined, all terms used herein, including technical or scientific terms, have the same meaning as commonly understood by one of ordinary skill in the art to which this invention belongs. Terms defined in commonly used dictionaries should be interpreted as having a meaning consistent with their meaning in the context of the relevant art, and will not be interpreted in an idealized or overly formal sense, unless expressly defined otherwise in this application.

Hereinafter, embodiments will be described in detail with reference to the attached drawings. Regardless of the drawing symbols, the same or corresponding components are denoted by the same reference numerals and redundant descriptions thereof will be omitted.

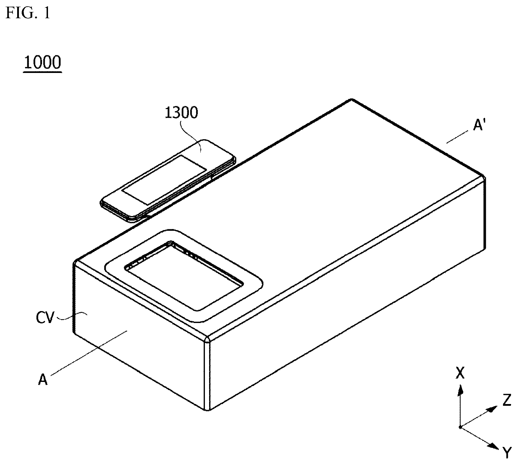

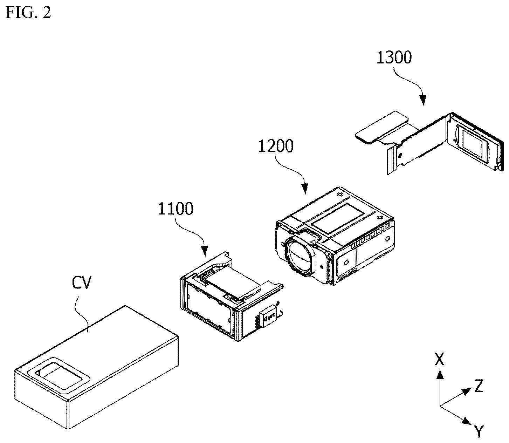

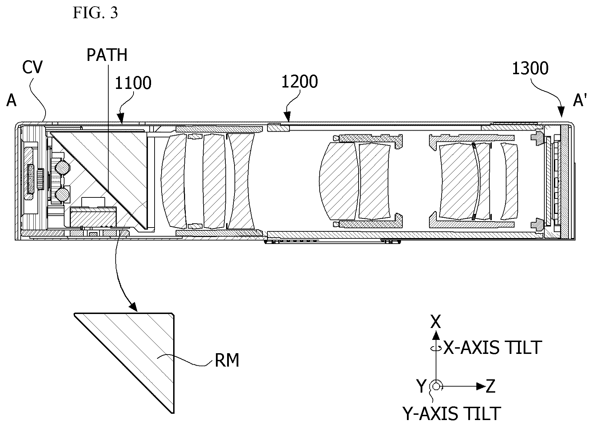

FIG. 1 is a perspective view of a camera module according to an embodiment, FIG. 2 is an exploded perspective view of the camera module according to the embodiment, and FIG. 3 is a cross-sectional view along line AA' in FIG. 1.

Referring to FIGS. 1 and 2, a camera module 1000 according to the embodiment may be composed of a cover CV, a first camera actuator 1100, a second camera actuator 1200, and a circuit board 1300. Here, the first camera actuator 1100 may be used interchangeably with a first actuator and the second camera actuator 1200 may be used interchangeably with a second actuator.

The cover CV may cover the first camera actuator 1100 and the second camera actuator 1200. A coupling force between the first camera actuator 1100 and the second camera actuator 1200 may be improved by the cover CV.

Furthermore, the cover CV may be made of a material that performs electromagnetic shielding. Thus, the first camera actuator 1100 and the second camera actuator 1200 in the cover CV may be easily protected.

Further, the first camera actuator 1100 may be an optical image stabilization (OIS) actuator. For example, the first camera actuator 1100 may move an optical member in a direction perpendicular to an optical axis (an axis of incident light).

The first camera actuator 1100 may include a fixed focal length lens disposed in a predetermined barrel (not shown). The fixed focal length lens may also be referred to as a "single focal length lens" or a "prime lens."

The first camera actuator 1100 may change an optical path. In an embodiment, the first camera actuator 1100 may vertically change the optical path through an internal optical member (for example, a prism or a mirror). For example, the optical member may change a direction of light from a first direction (X-axis direction) to a third direction (Z-axis direction). Alternatively, the optical member may change an axis of light from a first axis to a second axis. With this configuration, a configuration of lenses having sizes greater than a thickness of a mobile device may be disposed in the mobile device to perform magnification, auto-focus (AF), zoom, and OIS functions, even though the thickness of the mobile device is reduced, by changing the optical path.

Here, the present invention is not limited thereto and the first camera actuator 1100 may change the optical path vertically or at a predetermined angle multiple times.

The second camera actuator 1200 may be disposed at a rear end of the first camera actuator 1100. The second camera actuator 1200 may be coupled to the first camera actuator 1100. Further, the second camera actuator 1200 and the first camera actuator 1100 may be coupled to each other in various ways.

Furthermore, the second camera actuator 1200 may be a zoom actuator or an AF actuator. For example, the second camera actuator 1200 may support one or a plurality of lenses and move the lenses in response to a control signal from a predetermined control unit to perform an auto-focus function or a zoom function.

Further, one or the plurality of lenses may move independently or individually in the optical axis direction, and

the circuit board 1300 may be disposed at a rear end of the second camera actuator 1200. The circuit board 1300 may be electrically connected to the second camera actuator 1200 and the first camera actuator 1100. Moreover, a plurality of circuit boards 1300 may be provided.

The camera module according to the embodiment may be composed of one or a plurality of camera modules. For example, the plurality of camera modules may include a first camera module and a second camera module.

Further, the first camera module may include one or a plurality of actuators. For example, the first camera module may include the first camera actuator 1100 and the second camera actuator 1200.

Further, the second camera module may be disposed in a predetermined housing (not shown) and include an actuator (not shown) capable of driving a lens unit. The actuator may be a voice coil motor, a micro actuator, a silicon actuator, or the like and applied in various ways, including, but not limited to, capacitive, thermal, bimorph, and electrostatic methods. In addition, in this specification, the camera actuator may be referred to as an actuator or the like. In addition, a camera module composed of a plurality of camera modules may be mounted in various electronic devices, such as a mobile terminal and the like. Furthermore, the actuator may be a device for moving or tilting a lens and an optical member. Here, in the following description, the actuator is described as a concept in which the actuator includes a lens or an optical element. Furthermore, the actuator may be referred to as a 'lens transfer device,' a 'lens movement device,' an 'optical element transfer device,' an 'optical element movement device,' or the like.

Referring to FIG. 3, the camera module according to the embodiment may include the first camera actuator 1100 that performs an OIS function and the second camera actuator 1200 that performs zoom and AF functions.

Light may be incident into the camera module or the first camera actuator through an opening region located in an upper surface of the first camera actuator 1100. That is, light may be first incident into the first camera actuator 1100 in a vertical direction (for example, the X-axis direction, based on incident light), and the optical path may be changed to the optical axis direction (for example, the Z-axis direction) through the optical member. Further, light may pass through the second camera actuator 1200 and may be incident on the image sensor IS located at one end of the second camera actuator 1200 (PATH). In this specification, the Z-axis direction or the third direction is described as the optical axis direction as follows. Also, the first direction, the X-axis direction, is described as the vertical direction. Further, the second direction, the Y-axis direction, is described as a horizontal direction.

In this specification, a bottom surface means one side in the first direction. Further, the first direction is the X-axis direction in the drawings and may be used interchangeably with the second axis direction or the like. The second direction is the Y-axis direction in the drawings and may be used interchangeably with the first-axis direction or the like. The second direction is a direction perpendicular to the first direction. Also, the third direction is the Z-axis direction in the drawings and may be used interchangeably with the third-axis direction or the like. Further, the third direction is a direction perpendicular to both the first and second directions. Here, the third direction (Z-axis direction) corresponds to a direction of the optical axis, and the first direction (X-axis direction) and the second direction (Y-axis direction) are directions perpendicular to the optical axis. Also, the following description of the first and second camera actuators is made based on the optical axis direction being the third direction (Z-axis direction).

Furthermore, in this specification, an inner side may be a side in a direction from the cover CV toward the first camera actuator, and an outer side may be a side in a direction opposite to that of the inner side. That is, the first camera actuator and the second camera actuator may be located inside the cover CV, and the cover CV may be located outside the first camera actuator or the second camera actuator.

Further, with this configuration, the camera module according to the embodiment can improve the spatial limitations of the first camera actuator and the second camera actuator by changing the optical path. That is, the camera module according to the embodiment can expand the optical path while minimizing the thickness of the camera module in response to a change in the optical path. Furthermore, it should be understood that the second camera actuator can also provide a high range of magnification by controlling a focus or the like in the expanded optical path.

Furthermore, the camera module according to the embodiment can implement OIS through control of the optical path via the first camera actuator, thereby minimizing the occurrence of decentering or tilt phenomena and producing the best optical characteristics.

Furthermore, the second camera actuator 1200 may include an optical system and a lens driving unit. For example, the second camera actuator 1200 may have at least one of a first lens assembly, a second lens assembly, and a third lens assembly disposed therein.

Also, the second camera actuator 1200 may include a coil and a magnet to perform a high magnification zoom function and an auto-focus function.

For example, although the first lens assembly and the second lens assembly may be moving lenses that move via coils, magnets, and guide pins, and the third lens assembly may be a fixed lens, the present invention is not limited thereto. For example, the third lens assembly may function as a focator that forms a light image on a specific location, and the first lens assembly may function as a variator that reforms the image formed in the third lens assembly, which is a condenser, on a different location. Meanwhile, the first lens assembly may have a significant change in magnification due to a significant change in a distance to the subject or an image distance, and the first lens assembly, which is a variator, may play an important role in the focal length or the magnification change of the optical system. Meanwhile, an image point that is formed in the first lens assembly, which is a variator, may vary slightly depending on the location thereof. Thus, the second lens assembly may perform a location compensation function for the image formed using the variator. For example, the second lens assembly may function as a compensator, which functions to accurately form the image point formed in the first lens assembly, which is a variator, on an actual position of the image sensor. For example, the first lens assembly and the second lens assembly may be driven using an electromagnetic force due to the interaction of the coil and the magnet. The above contents can be applied to the lens assembly which will be described below. Furthermore, the first lens assembly to the third lens assembly may move in the optical axis direction, that is, the third direction. Further, the first lens assembly to the third lens assembly may move in the third direction independently or dependently. In the present invention, the first lens assembly and the second lens assembly may move in the optical axis direction. Further, the third lens assembly may be located at a front end of the first lens assembly or at a rear end of the second lens assembly. Further, the third lens assembly may not move in the optical axis direction. That is, the third lens assembly may be a fixed unit. Furthermore, the first and second lens assemblies may be moving units.

Meanwhile, when an actuator for OIS and an actuator for AF/zoom are disposed according to the embodiment of the present invention, magnetic interference with a magnet for AF/zoom may be prevented when driving OIS. Since a first driving magnet of the first camera actuator 1100 is disposed separately from the second camera actuator 1200, magnetic interference between the first camera actuator 1100 and the second camera actuator 1200 may be prevented. In this specification, OIS may be interchangeably referred to as image stabilization, optical image stabilization, optical image correction, and shake correction.

Particularly, in the first camera actuator 1100, an optical member RM may be tilted with respect to the X-axis or the Y-axis. Accordingly, it is possible to easily change the optical path according to the X-axis tilt or the Y-axis tilt.

The optical member RM may be seated in a holder of the first camera actuator. In an embodiment, the optical member RM may be formed of a mirror or a prism. Although the following description is made based on the optical member RM which is formed of a prism, the optical member RM may also be formed of a plurality of lenses as in the above-described embodiment. Alternatively, the optical member RM may be formed of a plurality of lenses and prisms or mirrors. Further, the optical member RM may include a reflector disposed therein. Here, the present invention is not limited thereto.

In the first camera actuator 1100, the optical member RM may be tilted with respect to the X-axis or the Y-axis by driving a VCM or the like. That is, OIS may be implemented by tilting or rotating the optical member RM with respect to the Y-axis direction or the X-axis direction.

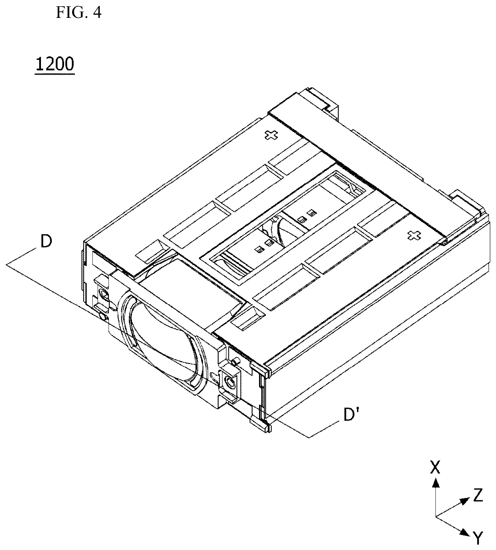

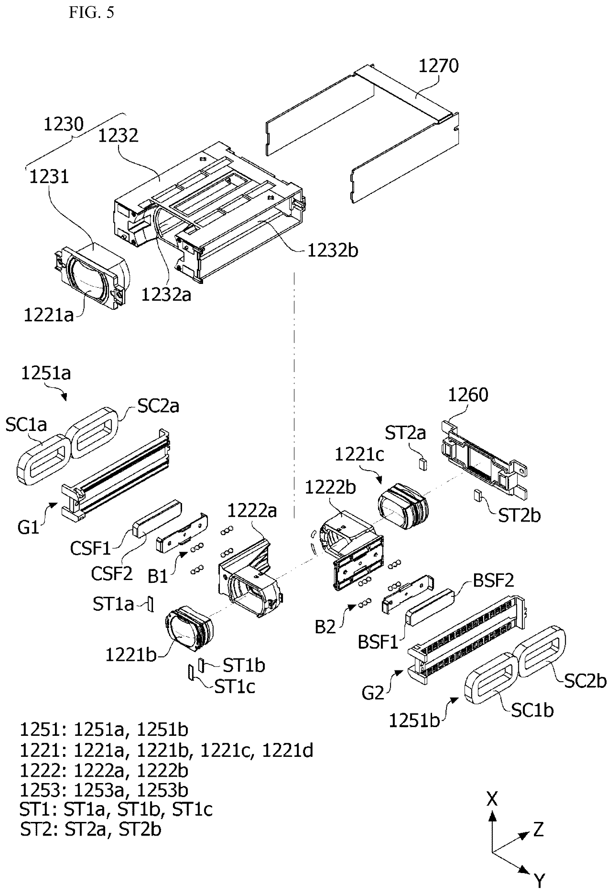

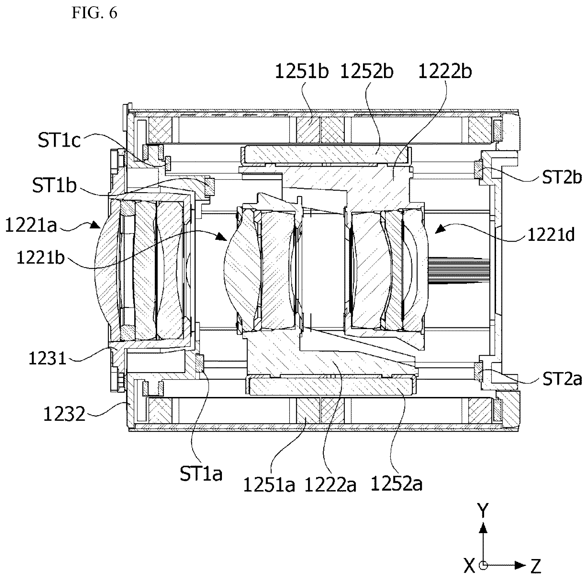

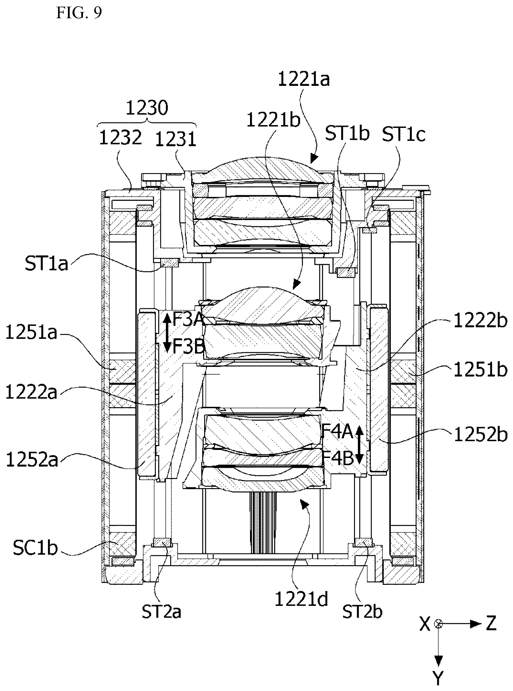

FIG. 4 is a perspective view of a second camera actuator according to the embodiment, FIG. 5 is an exploded perspective view of the second camera actuator according to the embodiment, FIG. 6 is a cross-sectional view along line DD' in FIG. 4, FIGS. 7 and 8 are views for describing each driving of a lens assembly according to the embodiment, and FIG. 9 is a view for describing the operation of the second camera actuator according to the embodiment.

Referring to FIGS. 4 to 6, the second camera actuator 1200 (or the camera device, the zoom lens transfer device, the zoom lens movement device, or the lens transfer device) according to the embodiment may include a lens unit 1220, a housing 1230, a driving unit 1250, a base unit 1260, a substrate unit 1270, and stoppers ST1 and ST2. Furthermore, the second camera actuator 1200 may further include a shield can (not shown), elastic units (not shown), and a coupling member (not shown).

In addition, a lens group may move in the optical axis direction, as will be described below. Further, the lens group may be coupled to the lens assembly and move together in the optical axis direction. In this case, the second camera actuator may include a moving unit that moves in the optical axis direction, like the lens group, and a fixed unit that does not move in the optical axis direction and is relatively fixed, unlike the moving unit. In this embodiment, the moving unit may include lens assemblies (for example, first and second lens assemblies) and optical driving magnets (first and second driving magnets). Further, the fixed unit may include a housing, a substrate unit, optical driving coils (first and second coils), and a Hall sensor. Furthermore, a driving magnet may be disposed on any one of the moving unit and the fixed unit, and a driving coil may be disposed on the other. In response to this description, a movement distance of the lens assembly, which will be described below, may correspond to a movement distance of the moving unit.

The shield can (not shown) may be located in one region (for example, the outermost region) of the second camera actuator 1200 to surround components which will be described below (the lens unit 1220, the housing 1230, the driving unit 1250, the base unit 1260, the substrate unit 1270, and an image sensor IS which is disposed on a circuit board at a rear end thereof).

The shield can (not shown) may block or reduce the electromagnetic waves generated from the outside. Accordingly, the occurrence of malfunctions in the driving unit 1250 can be reduced.

The lens unit 1220 may be located in the shield can (not shown). The lens unit 1220 may move in the third direction (Z-axis direction or optical axis direction). Accordingly, the AF function or the zoom function described above may be performed.

Additionally, the lens unit 1220 may be located in the housing 1230. Accordingly, at least a part of the lens unit 1220 may move in the housing 1230 in the optical axis direction or the third direction (Z-axis direction).

Specifically, the lens unit 1220 may include a lens group 1221 and a moving assembly 1222.

First, the lens group 1221 may include one or more lenses. Additionally, although a plurality of lens groups 1221 may be provided, the following description is made based on one lens group.

The lens group 1221 may be coupled to the moving assembly 1222 and may move in the third direction (Z-axis direction) using the electromagnetic force generated from a first magnet 1252a and a second magnet 1252b coupled to the moving assembly 1222.

In an embodiment, the lens group 1221 may include a first lens group 1221a, a second lens group 1221b, and a third lens group 1221c. The first lens group 1221a, the second lens group 1221b, and the third lens group 1221c may be sequentially arranged in the optical axis direction. Furthermore, the lens group 1221 may further include a fourth lens group. The fourth lens group may be disposed at a rear end of the third lens group 1221c.

The first lens group 1221a may be coupled and fixed to a 2-1 housing (or fixed assembly). In other words, the first lens group 1221a may not move in the optical axis direction.

The second lens group 1221b may be coupled to a first lens assembly 1222a and may move in the third direction or the optical axis direction. Magnification adjustment may be performed by moving the first lens assembly 1222a and the second lens group 1221b.

The third lens group 1221c may be coupled to a second lens assembly 1222b and may move in the third direction or the optical axis direction. Focus adjustment or auto-focus may be performed by moving the third lens group 1221.

Here, the number of lens groups is not limited, and the fourth lens group described above may not be present, or an additional lens group or the like other than the fourth lens group 1221d may be disposed.

The moving assembly 1222 may include an opening region that surrounds the lens group 1221. The moving assembly 1222 may be used interchangeably with the first and second lens assemblies. The moving assembly 1222 or the lens assembly may move in the optical axis direction (Z-axis direction) in the housing 1230. Further, the moving assembly 1222 may be coupled to the lens group 1221 in various ways. Additionally, the moving assembly 1222 may include a groove in a side surface thereof and may be coupled to the first magnet 1252a and the second magnet 1252b through the groove. A coupling member or the like may be applied to the groove.

Additionally, the moving assembly 1222 may be coupled to the elastic units (not shown) at upper and rear ends thereof. Accordingly, the moving assembly 1222 may move in the third direction (Z-axis direction) while supported by the elastic units (not shown). That is, the position of the moving assembly 1222 may be maintained and the direction of the moving assembly 1222 may be maintained in the third direction (in the Z-axis direction). The elastic units (not shown) may be formed of various elastic elements, such as a plate spring.

The moving assembly 1222 may be located in the housing 1230 and include the first lens assembly 1222a and the second lens assembly 1222b.

A region where the third lens group is seated in the second lens assembly 1222b may be located at a rear end of the first lens assembly 1222a. In other words, the region where the third lens group 1221c is seated in the second lens assembly 1222b may be located between a region where the second lens group 1221b is seated in the first lens assembly 1222a and the image sensor.

The first lens assembly 1222a and the second lens assembly 1222b may face a first guide unit G1 and a second guide unit G2, respectively. The first guide unit G1 and the second guide unit G2 may be located at a first side portion 1232a and a second side portion 1232b of the housing 1230 (or 2-2 housing) which will be described below.

Further, the optical driving magnets may be seated on outer surfaces of the first lens assembly 1222a and the second lens assembly 1222b. For example, the second magnet 1252b may be seated on the outer surface of the second lens assembly 1222b. The first magnet 1252a may be seated on the outer surface of the first lens assembly 1222a. In this specification, the first lens assembly 1222a may be interchangeably referred to as a 'first bobbin.' The second lens assembly 1222b may be interchangeably referred to as a 'second bobbin.'

The housing 1230 may be disposed between the lens unit 1220 and the shield can (not shown). Further, the housing 1230 may be disposed to surround the lens unit 1220.

The housing 1230 may include a 2-1 housing 1231 and a 2-2 housing 1232. The 2-1 housing 1231 may be coupled to the first lens group 1221a and may also be coupled to the first camera actuator described above. The 2-1 housing 1231 may be located in front of the 2-2 housing 1232. The 2-1 housing may be referred to as a "fixed assembly," a "fixed lens assembly," a "fixed lens accommodating unit," or the like. The 2-2 housing may be referred to as a 'main barrel,' a 'lens barrel,' a 'barrel,' or the like.

Further, the 2-2 housing 1232 may be located at a rear end of the 2-1 housing 1231. The first and second lens assemblies and the lens unit 1220 may be seated inside the 2-2 housing 1232.

The housing 1230 (or the 2-2 housing 1232) may have holes formed in side portions thereof. A first coil 1251a and a second coil 1251b may be disposed in the holes. The holes may be positioned to correspond to the grooves in the moving assembly 1222 described above. In this case, a plurality of first coils 1251a and a plurality of second coils 1251b may be provided.

In an embodiment, the housing 1230 (particularly, the 2-2 housing 1232) may include the first side portion 1232a and the second side portion 1232b. The first side portion 1232a and the second side portion 1232b may be positioned to correspond to each other. For example, the first side portion 1232a and the second side portion 1232b may be symmetrically disposed with respect to the third direction. An optical driving coil 1251 may be located on the first side portion 1232a and the second side portion 1232b. Further, the substrate unit 1270 may be seated on outer surfaces of the first side portion 1232a and the second side portion 1232b. In other words, a first substrate may be located on the outer surface of the first side portion 1232a, and a second substrate may be located on the outer surface of the second side portion 1232b.

Furthermore, the first guide unit G1 and the second guide unit G2 may be located in the first side portion 1232a and the second side portion 1232b of the housing 1230 (particularly, the 2-2 housing 1232).

The first guide unit G1 and the second guide unit G may be positioned to correspond to each other. For example, the first guide unit G1 and the second guide unit G2 may be positioned opposite to each other with respect to the third direction (Z-axis direction). Additionally, the first guide unit G1 and the second guide unit G2 may at least partially overlap each other in the second direction (Y-axis direction).

The first guide unit G1 and the second guide unit G2 may include one or more grooves (for example, guide grooves) or recesses. Further, a first ball B1 or a second ball B2 may be seated in the grooves or the recesses. The second camera actuator 1200 may further include a ball unit. The ball unit may include the first ball B1 and the second ball B2. By means of the ball unit, the first and second lens assemblies may move in the optical axis direction. In this case, the ball unit may include one or more rolling members and balls. Further, one or more balls may move along a guide groove of the first or second guide unit. Furthermore, one or more balls may move along recesses or grooves in the first and second lens assemblies. Accordingly, the first ball B1 or the second ball B2 may move in the third direction (Z-axis direction) in the guide groove of the first guide unit G1 or the guide groove of the second guide unit G2.

Alternatively, the first ball B1 or the second ball B2 may move in the third direction along a rail formed on an inner side of the first side portion 1232a of the housing 1230, or a rail formed on an inner side of the second side portion 1232b of the housing 1230.

Thus, the first lens assembly 1222a and the second lens assembly 1222b may move in the third direction or the optical axis direction. In this case, the second lens assembly 1222b may be disposed further adjacent to or closer to the image sensor than the first lens assembly 1222a.

According to the embodiment, the first ball B1 may come into contact with the first lens assembly 1222a. The second ball B2 may come into contact with the second lens assembly 1222b. Thus, the first ball B1 and the second ball B2 may overlap at least partially in the first direction (X-axis direction) depending on the position thereof.

Furthermore, the first guide unit G1 and the second guide unit G2 may include first guide grooves GG1a and GG2a facing a first recess RS1. Furthermore, the first guide unit G1 and the second guide unit G2 may include second guide grooves GG1b and GG2b facing a second recess RS2. The first guide grooves GG1a and GG2a and the second guide grooves GG1b and GG2b may be grooves extending in the third direction (Z-axis direction). Further, the first guide grooves GG1a and GG2a and the second guide grooves GG1b and GG2b may be grooves having different shapes. For example, the first guide grooves GG1a and GG2a may be grooves with inclined side surfaces, and the second guide grooves GG1b and GG2b may be grooves with side surfaces perpendicular to the bottom surface.

Furthermore, a plurality of first guide grooves GG1a and GG2b or a plurality of second guide grooves GG1b and GG2b may be provided. Further, a plurality of balls having at least some different diameters may be located in the plurality of guide grooves.

The second magnet 1252b may be positioned to face the second coil 1251b. Furthermore, the first magnet 1252a may be positioned to face the first coil 1251a.

For example, at least one of the first coil 1251a and the second coil 1251b may be composed of one or more coils. For example, the first coil 1251a may be composed of a plurality of coils. The second coil 1251b may be composed of a plurality of coils. Furthermore, even when the first coil and the second coil are one coil, a long stroke which will be described below may be implemented.

In an embodiment, the optical driving coil 1251 may be composed of sub-coils sequentially arranged in the optical axis direction (Z-axis direction). For example, the plurality of sub-coils may be sequentially arranged in the optical axis direction on both the sides of the main barrel 1232.

In this embodiment, the optical driving coil 1251 may include a first driving unit and a second driving unit. The first driving unit may provide a driving force which moves the first lens assembly 1222a in the optical axis direction. The first driving unit may include the first coil 1251a and the first magnet 1252a. Furthermore, the first driving unit may include a first driving coil and a first driving magnet. Accordingly, the first coil 1251a may be referred to as a 'first driving coil.' Further, the first magnet 1252a may be referred to as a 'first driving magnet.'

Further, the second driving unit may provide a driving force which moves the second lens assembly 1222b in the optical axis direction. The second driving unit may include the second coil 1251b and the second magnet 1252b.

Furthermore, the second driving unit may include a second driving coil and a second driving magnet. Accordingly, the second coil 1251b may be referred to as a 'second driving coil.' Further, the second magnet 1252b may be referred to as a 'second driving magnet.'

The elastic units (not shown) may include a first elastic member (not shown) and a second elastic member (not shown). The first elastic member (not shown) may be coupled to an upper surface of the moving assembly 1222. The second elastic member (not shown) may be coupled to a lower surface of the moving assembly 1222. Furthermore, the first elastic member (not shown) and the second elastic member (not shown) are formed of plate springs as described above. Additionally, the first elastic member (not shown) and the second elastic member (not shown) may provide elasticity for movement of the moving assembly 1222. However, the present invention is not limited to the above-described positions, and the elastic units may be disposed at various positions.

Further, the driving unit 1250 may provide a driving force which moves the lens unit 1220 in the third direction (Z-axis direction). The driving unit 1250 may include the optical driving coil 1251 and the optical driving magnet 1252. The optical driving coil 1251 and the optical driving magnet 1252 may be positioned to face each other. For example, the first driving coil 1251a and the first driving magnet 1252a may be positioned to face each other. Furthermore, the second driving coil 1251b and the second driving magnet 1252b may be positioned to face each other. The first driving coil 1251a may be disposed on one side in the second direction in the housing, and the second driving coil 1251a may be disposed on the other side in the second direction in the housing.

Furthermore, the driving unit 1250 may further include a Hall sensor unit. A Hall sensor unit 1253 includes one or more first Hall sensors 1253a and second Hall sensors 1253b, and may be located inside or outside the optical driving coil 1251.

The moving assembly may move in the third direction (Z-axis direction) using the electromagnetic force formed between the optical driving coil 1251 and the optical driving magnet 1252.

The optical driving coil 1251 may include the first coil 1251a and the second coil 1251b. Furthermore, as described above, the first coil 1251a and the second coil 1251b may be composed of a plurality of sub-coils. Additionally, the first coil 1251a and the second coil 1251b may be disposed in holes formed in the side portions of the housing 1230. Further, the first coil 1251a and the second coil 1251b may be electrically connected to the substrate unit 1270. Accordingly, the first coil 1251a and the second coil 1251b may receive a current or the like supplied through the substrate unit 1270.

Further, the optical driving coil 1251 may be coupled to the substrate unit 1270 through a yoke or the like.

Furthermore, in an embodiment, the optical driving coil 1251 is a fixed element together with the substrate unit 1270. On the other hand, the optical driving magnet 1252 is a moving element that moves in the optical axis direction (Z-axis direction) together with the first and second assemblies.

The optical driving magnet 1252 may include the first magnet 1252a and the second magnet 1252b.

In an embodiment, the first coil 1251a may include a first sub-coil SC1a and a second sub-coil SC2a. The first sub-coil SC1a and the second sub-coil SC2a may be sequentially arranged in the optical axis direction. The first sub-coil SC1a may be positioned closer to the first camera actuator than the second sub-coil SC2a.

Further, the second coil 1251b may include a third sub-coil SC1b and a fourth sub-coil SC2b. The third sub-coil SC1b and the fourth sub-coil SC2b may be sequentially arranged in the optical axis direction. The third sub-coil SC1b may be positioned closer to the first camera actuator than the fourth sub-coil SC2b.

Further, the first magnet 1252a may face the first sub-coil SC1a and the second sub-coil SC2a. The second magnet 1252b may face the third sub-coil SC1b and the fourth sub-coil SC2b. The first sub-coil SC1a may be positioned to overlap the third sub-coil SC1b in the second direction. The second sub-coil SC2a may be positioned to overlap the fourth sub-coil SC2b in the second direction. In this way, the first magnet 1252a and the second magnet 1252b may be disposed to face two sub-coils in the same manner.

Furthermore, in the second camera actuator, the coils of the first and second driving units may be described as including the first sub-coils SC1a and SC1b and the second sub-coils SC2a and SC2b. However, in the specification, the sub-coils driving the second lens assembly are described interchangeably with the third sub-coil and the fourth sub-coil.

The first sub-coil SC1a and the second sub-coil SC2a may be arranged spaced apart from each other in the optical axis direction. The first sub-coil SC1a and the second sub-coil SC2a may be connected in parallel with each other. For example, any one of one end and the other end of the first sub-coil SC1a and any one of one end and the other end of the second sub-coil SC2a may be connected as one node. Further, one of one end and the other end of the first sub-coil SC1a and the other of one end and the other end of the second sub-coil SC2a may be connected as another node. That is, a current applied to the first sub-coil SC1a and the second sub-coil SC2a may be distributed to each of the sub-coils. Thus, the first sub-coil SC1a and the second sub-coil SC2a are electrically connected in parallel with each other, which can reduce heat generation.

Furthermore, the polarity of one surface of the first driving magnet 1252a facing the first driving coil SC1a or SC2a may be the same as the polarity of one surface of the second driving magnet 1252b facing the second driving coil SC1b or SC2b. For example, an inner surface of the first driving magnet 1252a and an inner surface of the second driving magnet 1252b may be one of an N pole and an S pole (for example, an N pole). An outer surface of the first driving magnet 1252a and an outer surface of the second driving magnet 1252b may be the other of the N pole and the S pole (for example, the S pole). Here, the inner surface may be a side surface adjacent to the optical axis with respect to the optical axis, and the outer surface may be a side surface away from the optical axis. Furthermore, the first magnet 1252a may have a first pole on a first surface BSF1 facing the optical driving coil (for example, the first coil). Further, the first magnet 1252a may have a second pole on a second surface BSF2 that is a surface opposite to the first surface BSF1. The second magnet 1252b may have a first pole on a first surface BSF1 facing the optical driving coil (for example, the second coil). Further, the second magnet 1252b may have a second pole on the second surface BSF2 that is a surface opposite to the first surface BSF1. The first pole may be one of an N pole and an S pole. Further, the second pole may be the other of the N pole and the S pole.

Alternatively, the first driving magnet and the second driving magnet may have a structure in which the N pole/S pole or the S pole/N pole are sequentially arranged in the optical axis direction.

Furthermore, the third sub-coil SC1b and the fourth sub-coil SC2b may be arranged spaced apart from each other in the optical axis direction. The third sub-coil SC1b and the fourth sub-coil SC2b may be connected in parallel with each other. For example, any one of one end and the other end of the third sub-coil SC1b and any one of one end and the other end of the fourth sub-coil SC2b may be connected as one node.

The first magnet 1252a and the second magnet 1252b may be disposed in the above-described grooves of the moving assembly 1222, and may be positioned to correspond to the first coil 1251a and the second coil 1251b. Further, the optical driving magnet 1252 may be coupled to the first and second lens assemblies (or moving assembly) together with a yoke to be described below.

The base unit 1260 may be located between the lens unit 1220 and the image sensor in the circuit board. A component such as a filter may be fixed to the base unit 1260. Additionally, the base unit 1260 may be disposed to surround the image sensor described above. With this configuration, the image sensor is free from foreign matter, which can improve the reliability of the device. However, this configuration is omitted in some of the drawings and will be described below.

Furthermore, the second camera actuator 1200 may be a zoom actuator or an auto-focus actuator. For example, the second camera actuator supports one or a plurality of lenses and may move the lenses in response to a control signal from a predetermined control unit to perform an auto-focus function or a zoom function.

Further, the second camera actuator may be a fixed zoom or a continuous zoom. For example, the second camera actuator may move the lens group 1221.

Furthermore, the second camera actuator may be composed of a plurality of lens assemblies. For example, in the second camera actuator, one or more of the third lens assembly (not shown) and the guide pin (not shown) may be disposed, in addition to the first lens assembly 1222a and the second lens assembly 1222b. The above contents can be applied to this. Thus, the second camera actuator may perform a high magnification zoom function via the driving unit.

The image sensor may be located inside or outside the second camera actuator. In an embodiment, the image sensor may be located outside the second camera actuator, as shown in the drawing. For example, the image sensor may be located on the circuit board. The image sensor may receive light and convert the received light into electrical signals. Furthermore, the image sensor may be composed of a plurality of pixels arranged in an array form. Further, the image sensor may be located on the optical axis.

The substrate unit 1270 may come into contact with a side portion of the housing. For example, the substrate unit 1270 may be located on an outer surface (first side surface) of a first side portion and an outer surface (second side surface) of a second side portion of the housing, particularly, the 2-2 housing, and may come into contact with the first side surface and the second side surface.

The second camera actuator may further include first stoppers ST1a, ST1b, and ST1c disposed at one end (or front end) and second stoppers ST2a and ST2b disposed at the other end (or rear end) in the housing (or 2-2 housing 1232).

The first stopper ST1 may be located at one end in the housing. For example, the first stopper ST1 may be located at an end portion in a direction opposite to the optical axis direction in the 2-2 housing or the main barrel 1232. In an embodiment, the first stopper ST1 may be located on an inner side wall or an inner wall of the housing or the main barrel 1232. The first stopper ST1 may be located on a first inner wall of the first inner wall and a second inner wall facing each other in the optical axis direction in the main barrel 1232. Furthermore, the first stopper ST1 may include a 1-1 stopper ST1a disposed on one side and a 1-2 stopper ST1b disposed on the other side. For example, the 1-1 stopper ST1a may be disposed on one side of the first inner wall. Further, the 1-2 stopper ST1b may be disposed on the other side of the first inner wall. The 1-1 stopper ST1a may be located adjacent to the first side portion. The 1-2 stopper ST1b may be located adjacent to the second side portion. One side and the other side may mean one side and a side opposite thereto in the second direction.

Alternatively, the 1-1 stopper ST1a may overlap the guiding unit of the first lens assembly in the optical axis direction. The 1-2 stopper ST1b may overlap a lens protrusion of the first lens assembly in the optical axis direction.

Additionally, the first stopper ST1 may include a 1-3 stopper ST1c disposed on the other side in the main barrel 1232. The 1-3 stopper ST1c may be positioned to overlap a guiding unit of the second lens assembly 1222b in the optical axis direction. The 1-2 stopper ST1b may be located between the 1-3 stopper ST1c and the 1-1 stopper ST1a in the horizontal direction or in the second direction.

Additionally, the second stopper ST2 may be disposed at the other end in the 2-2 housing or the main barrel 1232. For example, the second stopper ST2 may be located at an end portion in the optical axis direction in the 2-2 housing or the main barrel 1232. In an embodiment, the second stopper ST2 may be located on an inner side wall or an inner wall of the housing or the main barrel 1232. The second stopper ST2 may be located on the second inner wall of the first inner wall and the second inner wall facing each other in the optical axis direction in the main barrel 1232. The first inner wall may be adjacent to the first camera actuator or the first lens assembly. The second inner wall may be adjacent to the image sensor.

Furthermore, the second stopper ST2 may include a 2-1 stopper ST2a disposed on one side and a 2-2 stopper ST2b disposed on the other side. The 2-1 stopper ST2a may be positioned adjacent to the first side portion. The 2-2 stopper ST2b may be positioned adjacent to the second side portion. For example, the 2-1 stopper ST2a may be disposed on one side of the first inner wall. Further, the 2-2 stopper ST2b may be disposed on the other side of the first inner wall.

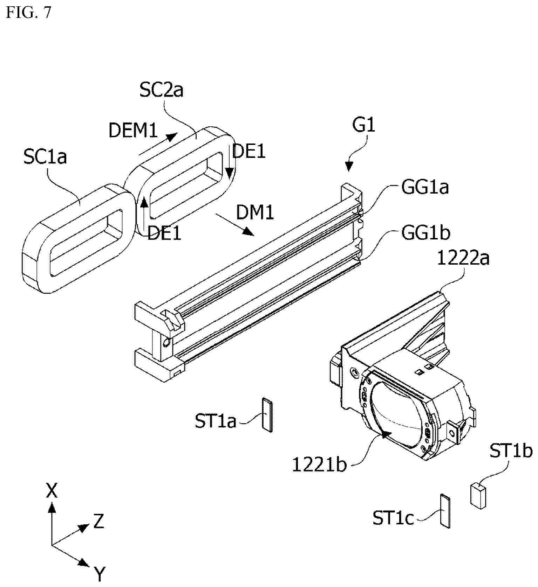

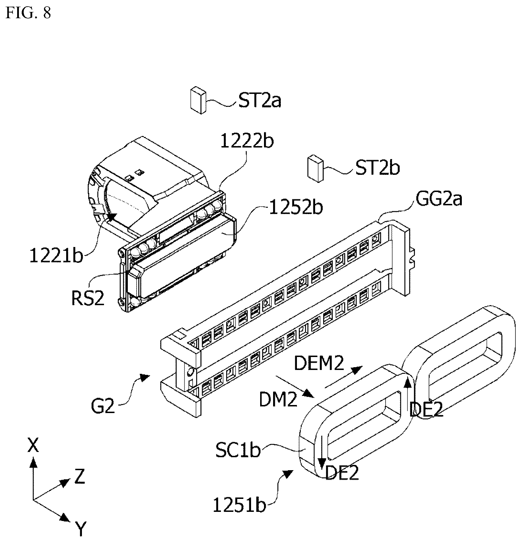

Referring to FIGS. 7 and 8, an electromagnetic force will be described below based on one coil. In the camera device according to the embodiment, an electromagnetic force DEM1 between the first magnet 1252a and the first coil 1251a may be generated so that the first lens assembly 1222a moves along a rail located on the inner surface of the housing through the first ball B1 in a horizontal direction to the optical axis, that is, in the third direction (Z-axis direction) or in a direction opposite to the third direction. At this time, the first magnet 1252a and the second magnet 1252b do not move to a region facing the edges of the first and second sub-coils. Thus, an electromagnetic force is formed based on the flow of current in the regions adjacent to the first sub-coil and the second sub-coil.

As described above, in the camera device according to the embodiment, the first magnet 1252a may be provided in the first lens assembly 1222a using, for example, a single-pole magnetization method. For example, in an embodiment, a surface (first surface) facing the outer surface of the first magnet 1252a may be an S pole. Further, the outer surface of the first magnet 1252a may be a surface facing the first coil 1251a. Further, a surface opposite to the first surface may be an N pole. Accordingly, only one of the N pole and S pole may be positioned to face the first coil 1251a. Here, the following description will be made based on the outer surface of the first magnet 1252a being an S pole. Furthermore, the first coil 1251a may be composed of a plurality of sub-coils, and current may flow in directions opposite to each other in the plurality of sub-coils. That is, in a region adjacent to the second sub-coil SC2a in the first sub-coil SC1a, current may flow in the same manner as in 'DE1.'

In other words, a first region of the first sub-coil SC1a and a second region of the second sub-coil SC2a may have the same current direction. The first region of the first sub-coil SC1a is a region which overlaps the first driving magnet 1252a in a direction perpendicular to the optical axis direction (second direction) and is disposed perpendicular to the optical axis direction (for example, disposed in the first direction). The second region of the second sub-coil Sc2a is a region which overlaps the first driving magnet 1252a in a direction perpendicular to the optical axis direction (second direction) and is disposed perpendicular to the optical axis direction (for example, disposed in the first direction).

Furthermore, as shown in the drawing, in the embodiment, when a magnetic force is applied in the second direction (Y-axis direction) from the S pole of the first magnet 1252a and the current DE1 flows in the first direction (X-axis direction) in the first coil 1251a, the electromagnetic force DEM1 may act in the third direction (Z-axis direction) according to the interaction of electromagnetic forces (for example, Fleming's left hand rule).

At this time, since the first coil 1251a is fixed to the side portion of the housing, the first lens assembly 1222a in which the first magnet 1252a is disposed may move in a direction opposite to the Z-axis direction by the electromagnetic force DEM1 according to the direction of a current. That is, the optical driving magnet may move in a direction opposite to that of the electromagnetic force applied to the optical driving coil. Also, the direction of the electromagnetic force may be changed depending on the current of the coil and the magnetic force of the magnet.

Accordingly, the first lens assembly 1222a may move along the rail located on the inner surface of the housing through the first ball in the third direction or in a direction parallel to the optical axis direction (in both directions). In this case, the electromagnetic force DEM1 may be controlled in proportion to the current DE1 applied to the first coil 1251a.

The first lens assembly 1222a or the second lens assembly 1222b may include a first recess RS1 in which the first ball or the second ball is seated. Additionally, the first lens assembly 1222a or the second lens assembly 1222b may include a second recess RS2 in which the first ball or the second ball is seated. A plurality of first recesses RS1 and a plurality of second recesses RS2 may be provided. A length in the optical axis direction (Z-axis direction) of the first recess RS1 may be set in advance. Furthermore, a length in the optical axis direction (Z-axis direction) of the second recess RS2 may be set in advance. Accordingly, the first ball and the second ball may have movement distances thereof adjusted in the optical axis direction in the recesses. In other words, the first recess RS1 or the second recess RS2 may be a stopper for the first or second ball.

Further, in the camera device according to the embodiment, the second magnet 1252b may be provided in the second lens assembly 1222b using, for example, a single-pole magnetization method.

Furthermore, the first coil 1251a may be composed of a plurality of sub-coils, and current may flow in directions opposite to each other in the plurality of sub-coils. That is, in a region adjacent to the second sub-coil SC2a in the first sub-coil SC1a, current may flow in the same manner as in 'DE1.'

Additionally, in an embodiment, any one of the N pole and the S pole of the second magnet 1252b may be positioned to face the second coil 1251b. Further, in an embodiment, a surface (first surface) facing the outer surface of the second magnet 1252b may be an S pole. Also, the first surface may be an N pole. The following description will be made based on the first surface being an N pole as shown in the drawing.

Furthermore, the second coil 1251b may be composed of a plurality of sub-coils, and current may flow in directions opposite to each other in the plurality of sub-coils. That is, in a region adjacent to the second sub-coil SC2b in the first sub-coil SC1b, current may flow in the same manner as in 'DE2.'

In an embodiment, when a magnetic force DM2 is applied in the second direction (Y-axis direction) from the first surface (N pole) of the second magnet 1252b and a current DE2 flows in the first direction (X-axis direction) from the second coil 1251b corresponding to the N pole, an electromagnetic force DEM2 may act in the third direction (Z-axis direction) according to the interaction of electromagnetic forces (for example, Fleming's left hand rule).

At this time, since the second coil 1251b is fixed to the side portion of the housing, the second lens assembly 1222b in which the second magnet 1252b is disposed may move in a direction opposite to the Z-axis direction by the electromagnetic force DEM2 according to the direction of a current. For example, as described above, the direction of the electromagnetic force may be changed depending on the current of the coil and the magnetic force of the magnet. Accordingly, the second lens assembly 1222b may move along the rail located on the inner surface of the housing through the second ball B2 in a direction parallel to the third direction (Z-axis direction). In this case, the electromagnetic force DEM2 may be controlled in proportion to the current DE2 applied to the second coil 1251b.

Referring to FIG. 9, in the camera device according to the embodiment, the driving unit may provide driving forces F3A, F3B, F4A, and F4B that move the first lens assembly 1222a and the second lens assembly 1222b of the lens unit 1220 in the third direction (Z-axis direction). The driving unit may include the optical driving coil 1251 and the optical driving magnet 1252 as described above. Further, the lens unit 1220 may move in the third direction (Z-axis direction) using the electromagnetic force formed between the optical driving coil 1251 and the optical driving magnet 1252.

At this time, the first coil 1251a and the second coil 1251b may be disposed in holes formed in the side portions (for example, the first side portion and the second side portion) of the housing 1230. Further, the second coil 1251b may be electrically connected to the first substrate 1271. The first coil 1251a may be electrically connected to the second substrate 1272. Accordingly, the first coil 1251a and the second coil 1251b may receive a driving signal (for example, current) supplied from a driving driver on the circuit board of the circuit board 1300 through the substrate unit 1270.

At this time, the first lens assembly 1222a on which the first magnet 1252a is seated may move in the third direction (Z-axis direction) by the electromagnetic forces F3A and F3B between the first coil 1251a and the first magnet 1252a. Additionally, the second lens group 1221b seated in the first lens assembly 1222a may also move in the third direction.

Further, by the electromagnetic forces F4A and F4B between the second coil 1251b and the second magnet 1252b, the second lens assembly 1222b on which the second magnet 1252b is seated may move in the third direction (Z-axis direction). Additionally, the third lens group 1221c seated in the second lens assembly 1222b may also move in the third direction.

Accordingly, as described above, the focal length or the magnification of the optical system may be changed by moving the second lens group 1221b and the third lens group 1221c. In an embodiment, the magnification may be changed by moving the second lens group 1221b. In other words, zoom may be achieved. Additionally, focus may be adjusted by moving the third lens group 1221c. In other words, auto-focus may be achieved.

Additionally, the second camera actuator may be a fixed zoom or continuous zoom type depending on the movement method of the second lens group (or third lens group).

Furthermore, the first Hall sensor 1253a and the second Hall sensor 1253b may be disposed at at least one of the first sub-coil and the second sub-coil. For example, the first Hall sensor 1253a and the second Hall sensor 1253b may overlap in the second direction. Alternatively, the first Hall sensor 1253a and the second Hall sensor 1253b may not overlap in the second direction. Alternatively, the first Hall sensor 1253a and the second Hall sensor 1253b may partially overlap in the second direction.

Depending on the driving of the first lens assembly, the first lens assembly 1222a may be located as close as possible to the first stopper ST1a and ST1b side. At this time, a distance between the guiding unit in the first lens assembly 1222a and the 1-1 stopper ST1a may be reduced. In addition, a distance between the 1-2 stopper ST1b and the lens protrusion portion of the first lens assembly may also be reduced.

That is, when the first lens assembly 1222a maximally moves toward the first camera actuator side, the first lens assembly 1222a may collide with the 1-1 stopper ST1a and the 1-2 stopper ST1b. The 1-1 stopper and the 1-2 stopper may collide simultaneously or sequentially with the first lens assembly due to the movement of the first lens assembly. In this embodiment, the 1-1 stopper and the 1-2 stopper may collide simultaneously with the first lens assembly due to the movement of the first lens assembly.

Accordingly, even when a lens made of glass is disposed in the first lens assembly 1222a (or the second lens assembly) (for example, at the frontmost end), collision with the first lens assembly 1222a (or the second lens assembly) at the maximum movement position (mecha position) thereof may be minimized. That is, the phenomenon of the lens being broken may be suppressed. For example, at least one of the first lens assembly and the second lens assembly may include a lens including glass. Further, the glass may be located at an outermost side in the first lens assembly or the second lens assembly.

In a modified example, in the event of a sequential collision, the impact may be primarily absorbed by the guiding unit, which has a large volume, thereby minimizing damage to the first lens assembly.

Similarly, the 2-2 stopper ST2b may collide with the second lens assembly 1222b. That is, when the second lens assembly 1222b maximally moves toward the image sensor or in the optical axis direction, the second lens assembly 1222b may collide with the 2-2 stopper ST2b and the 2-1 stopper ST2a. Accordingly, even when a lens made of glass is disposed in the second lens assembly 1222b, collision with the maximum movement position (mecha position) of the first lens assembly 1222a may be minimized. That is, the phenomenon of the lens being broken may be suppressed. The same applies to modified examples.

In other words, the 1-1 stopper ST1a and the 1-2 stopper ST1b may come into contact with the first lens assembly 1222a when the first lens assembly 1222a moves. When the first lens assembly 1222a maximally moves in a mecha to mecha manner, the first lens assembly 1222a may come into contact with the first stoppers ST1a and ST1b. For example, the first lens assembly 1222a may move to an end portion in the optical axis direction or to an end portion in a direction opposite to the optical axis direction. At this time, the first lens assembly 1222a may move to a location where the first lens assembly 1222a comes into contact with the first stopper or the second stopper. For example, when the first lens assembly 1222a moves, the camera module may be in a tele or wide state. The camera module may be in the wide state when the first lens assembly 1222a comes into contact with the first stopper, and the camera module may be in the tele state when the first lens assembly 1222a comes into contact with the second stopper.

Furthermore, when the second lens assembly 1222b moves in the optical axis direction, the 1-3 stopper ST1c may come into contact with the second lens assembly 1222b.

In this way, due to the first stopper, the impact caused by the movement of the first lens assembly 1222a and the second lens assembly 1222b may be reduced. As a result, as described above, the reliability of the first lens assembly 1222a and the second lens assembly 1222b as well as the reliability of the second lens group and the third lens group therein can be improved. Further, since the range of movement of the first lens assembly 1222a and the second lens assembly 1222b may be limited, driving for accurate magnification and the like may be achieved.

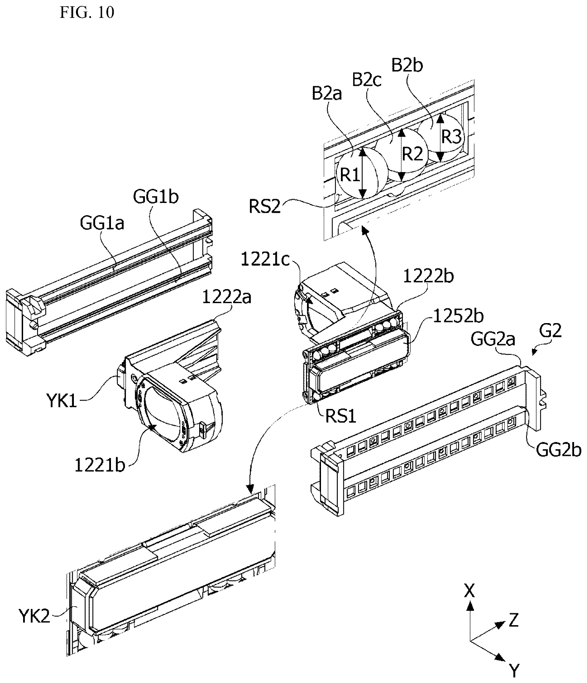

FIG. 10 is a perspective view of a part of a configuration of the second camera actuator according to the embodiment.

Referring to FIG. 10, the first lens assembly 1222a and the second lens assembly 1222b may be spaced apart in the optical axis direction (Z-axis direction).

The second guide unit G2 may be disposed opposite to the first guide unit G1. In an embodiment, the first guide unit G1 and the second guide unit G2 may overlap at least partially in the second direction (Y-axis direction). With this configuration, the space efficiency of the driving unit for moving the first and second lens assemblies in the second camera actuator can be improved so that the miniaturization of the second camera actuator is easily achieved.

The first guide unit G1 may have the first ball, the first coil, or the like disposed adjacent thereto as described above and the second guide unit G2 may have the second ball, the second coil, or the like disposed adjacent thereto as described above.

Furthermore, according to the embodiment, the first and second lens assemblies 1222a and 1222b may include yokes YK1 and YK2 disposed on the sides thereof, respectively.

A first yoke YK1 may be located on a side surface of the first lens assembly 1222a. A second yoke YK2 may be located on a side surface of the second lens assembly 1222b. At least a part of the first yoke YK1 and the second yoke YK2 may extend outward. Accordingly, the first yoke YK1 may surround at least a part of the side surface of the first magnet 1252a. As shown in the drawing, the first yoke YK1 may be formed to have various structures that surround an inner surface and a part of a side surface of the first magnet 1252a. For example, the first yoke YK1 is formed of divided members, and each of the divided members may be located on the inner surface and the side surface of the first magnet 1252a. Accordingly, the coupling force between the single-pole magnetized optical driving magnet and the yoke can be improved. Similarly, the second yoke YK2 may surround at least a part of a side surface of the second magnet 1252b. As shown in the drawing, the second yoke YK2 may be formed to have various structures that surround an inner surface and a part of a side surface of the second magnet 1252b. For example, the second yoke YK2 may be formed of divided members, and each of the divided members may be located on the inner surface and the side surface of the second magnet 1252b.

Furthermore, the yoke may be positioned to be coupled to both the optical driving magnet and the optical driving coil.

Further, a plurality of balls may be located on outer surfaces of the lens assemblies. As described above, the first ball may be located on an outer surface of the first lens assembly 1222a. The second ball may be located on an outer surface of the second lens assembly 1222b.

A plurality of first balls and a plurality of second balls may be provided. For example, the plurality of first balls may be arranged side by side in the optical axis direction (Z-axis direction) in one recess of the first lens assembly 1222a. Additionally, the plurality of second balls may be arranged side by side in the optical axis direction (Z-axis direction) in one recess of the second lens assembly 1222b.

For example, the second balls B2 may include a first sub-ball B2a, a second sub-ball B2b, and a third sub-ball B2c. The first sub-ball B2a, the second sub-ball B2b, and the third sub-ball B2c may be disposed side by side in the optical axis direction. Accordingly, the first sub-ball B2a, the second sub-ball B2b, and the third sub-ball B2c may at least partially overlap each other in the optical axis direction.

Further, the first sub-ball B2a and the second sub-ball B2b may be located at the edges of the plurality of balls. The third sub-ball B2c may be located between the first sub-ball B2a and the second sub-ball B2b.

The plurality of balls may have the same diameter or different diameters. For example, the first sub-ball B2a, the second sub-ball B2b, and the third sub-ball B2c may have at least some of the same diameters R1, R3, and R2. Furthermore, the first sub-ball B2a, the second sub-ball B2b, and the third sub-ball B2c may have different diameters R1, R3, and R2.

In an embodiment, the diameters R1 and R3 of the balls (first and second sub-balls) located at the edges may be smaller than the diameter R2 of the ball (third sub-ball) located inside among the plurality of balls. For example, the diameters R1 and R3 of the first sub-ball B2a and the second sub-ball B2b may be smaller than the diameter R2 of the third sub-ball B2c. With this configuration, the movement of the lens assembly due to the plurality of balls may be performed accurately without tilting to one side.

The description of the plurality of balls can be equally applied to the first ball.

Furthermore, the plurality of optical driving magnets may be composed of the first magnet and the second magnet, as described above. Further, the first magnet and the second magnet may be opposite to each other and have the same pole disposed on the outside thereof. That is, the first surface (outer surface) of the first magnet and the first surface (outer surface) of the second magnet may be a first pole. Further, the second surface (inner surface) of the first magnet and the second surface (inner surface) of the second magnet may be a second pole.

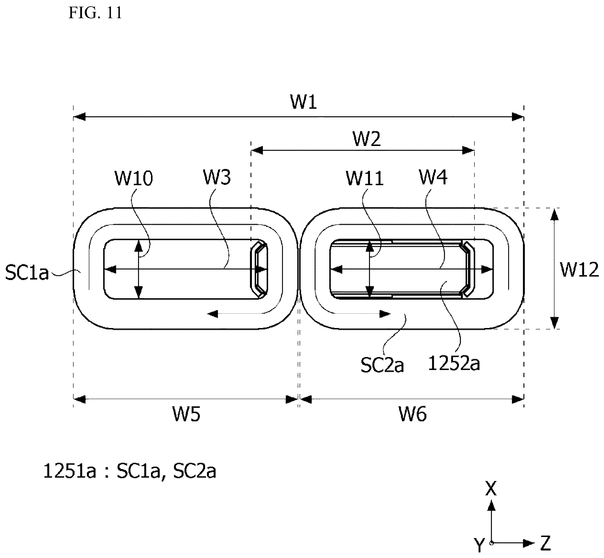

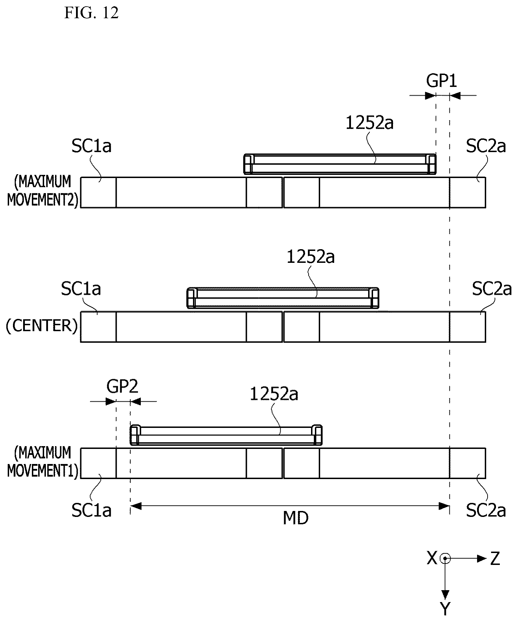

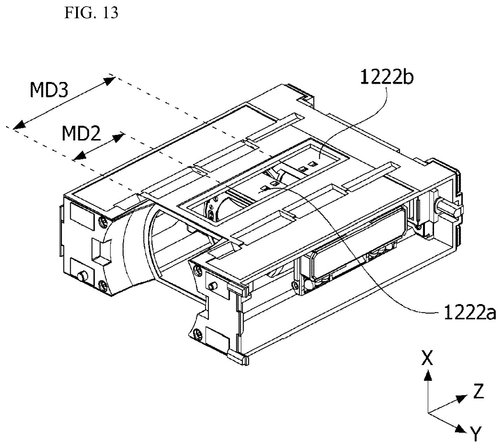

FIG. 11 is a view showing an optical driving coil, an optical driving magnet, and a yoke according to the embodiment, FIG. 12 is a view for describing the movement of the optical driving magnet using a driving unit according to the embodiment, and FIG. 13 is a view for describing the movement of the second and third lens assemblies according to the embodiment.

Referring to FIGS. 11 to 13, a length W5 in the optical axis direction (Z-axis direction) of the first sub-coil SC1a may be the same as a length W6 in the optical axis direction (Z-axis direction) of the second sub-coil SC2a. With this configuration, driving force control by the first sub-coil SC1a and the second sub-coil SC2a may be easily performed.

Furthermore, the overall length W1 (or maximum length) in the optical axis direction (Z-axis direction) of the optical driving coil may be greater than a length W2 (or maximum length) in the optical axis direction (Z-axis direction) of the optical driving magnet 1252a. With this configuration, a stroke by the optical driving magnet may be maximally performed. Furthermore, a long stroke using the single-pole magnetized optical driving magnet may be performed.

Furthermore, in an embodiment, a maximum movement distance MD of the first lens assembly in the optical axis direction may be greater than a length in a short axis direction (first direction) of the hole (or hollow portion) of the first sub-coil SC1a and equal to or smaller than a length W3 in a long axis direction (optical axis direction or third direction) of the hole (or hollow portion) of the first sub-coil SC1a.

Furthermore, the maximum movement distance MD of the first lens assembly may be greater than a length in a short axis direction (first direction) of the hole (or hollow portion) of the second sub-coil SC2a and equal to or smaller than a length W4 in a long axis direction (optical axis direction or third direction) of the hole (or hollow portion) of the second sub-coil SC2a.

Furthermore, in an embodiment, a maximum movement distance MD3 of the second lens assembly in the optical axis direction may be greater than a length in a short axis direction (first direction) of the hole (or hollow portion) of the third sub-coil SC1b and equal to or smaller than a length in a long axis direction (optical axis direction or third direction) of the hole (or hollow portion) of the third sub-coil SC1b.

Furthermore, the maximum movement distance MD3 of the first lens assembly may be greater than a length in a short axis direction (first direction) of the hole (or hollow portion) of the fourth sub-coil SC2b and equal to or smaller than a length in a long axis direction (optical axis direction or third direction) of the hole (or hollow portion) of the fourth sub-coil SC2b.

Furthermore, the length W3 in the optical axis direction of an inner hole of the first sub-coil SC1a and the length W4 in the optical axis direction of an inner hole of the second sub-coil SC2a may be the same.

Furthermore, the length W2 in the optical axis direction (Z-axis direction) of the driving magnet 1252a may be greater than the length W3 in the optical axis direction of the inner hole of the first sub-coil SC1a. Further, the length W2 in the optical axis direction (Z-axis direction) of the driving magnet 1252a may be greater than the length W4 in the optical axis direction of the inner hole of the second sub-coil SC2a. In this way, the optical driving magnet may move along the optical axis within the entire length in the optical axis direction of the optical driving coil.

Furthermore, the length W2 in the optical axis direction (Z-axis direction) of the optical driving magnet (or the first and second driving magnets) may be greater than the lengths W3 and W4 in the optical axis direction of any one of the hollow portions (or holes) of each of the sub-coils (the first sub-coil to the fourth sub-coil).

The length W2 (maximum length) in the optical axis direction (Z-axis direction) of the optical driving magnet may be smaller than the length W5 in the optical axis direction (Z-axis direction) of the first sub-coil SC1a.

With this configuration, a counter electromotive force is not generated due to the movement in the optical axis direction of the lens assembly, and a long stroke may be realized.

The length W2 (maximum length) in the optical axis direction (Z-axis direction) of the optical driving magnet (or first and second driving magnets) may be 0.6 times or less the maximum length W1 in the optical axis direction of the corresponding first driving coil. Preferably, the length W2 (maximum length) in the optical axis direction (Z-axis direction) of the optical driving magnet (or first and second driving magnets) may be 0.55 times or less the maximum length W1 in the optical axis direction of the corresponding first driving coil. More preferably, the length W2 (maximum length) in the optical axis direction (Z-axis direction) of the optical driving magnet (or first and second driving magnets) may be 0.5 times or less the maximum length W1 in the optical axis direction of the corresponding first driving coil. Thus, the camera device may provide a long stroke with a minimal counter electromotive force.

The maximum movement distance MD of the first lens assembly in the optical axis direction may be smaller than the length W2 (maximum length) in the optical axis direction (Z-axis direction) of the optical driving magnet (or first and second driving magnets). For example, the maximum movement distance MD of the first lens assembly in the optical axis direction may be 0.66 times or more and 0.92 times or less the length W2 (maximum length) in the optical axis direction (Z-axis direction) of the optical driving magnet (or first and second driving magnets). In this way, the generation of a counter electromotive force may be suppressed as much as possible.

Furthermore, in an embodiment, the overall length W1 (or maximum length) in the optical axis direction (Z-axis direction) of the optical driving coil may be 18 mm to 20 mm. Furthermore, the length W2 in the optical axis direction (Z-axis direction) of the optical driving magnet may be 8 mm to 12 mm. Further, the length W3 in the long axis direction (optical axis direction or third direction) of the hole (or hollow portion) of the first sub-coil SC1a may be 5.6 mm to 8.7 mm. Further, the length W4 in the long axis direction (optical axis direction or third direction) of the hole (or hollow portion) of the second sub-coil SC2a may be 5.6 mm to 8.7 mm.

The length W5 in the optical axis direction (Z-axis direction) of the first sub-coil SC1a may be 8 mm to 10 mm. However, as described above, the length W5 in the optical axis direction (Z-axis direction) of the first sub-coil SC1a may be greater than or equal to the length W2 in the optical axis direction (Z-axis direction) of the optical driving magnet.

Furthermore, the length W6 in the optical axis direction (Z-axis direction) of the second sub-coil SC2a may be 8 mm to 10 mm. However, as described above, the length W5 in the optical axis direction (Z-axis direction) of the second sub-coil SC2a may be greater than or equal to the length W2 in the optical axis direction (Z-axis direction) of the optical driving magnet.

Furthermore, in an embodiment, current may flow in the first sub-coil SC1a and the second sub-coil SC2a in different directions according to the single-pole magnetization of the optical driving magnet. For example, current may flow in the first sub-coil SC1a in any one of the clockwise and counterclockwise directions, and current may flow in the second sub-coil SC2a in the other of the clockwise and counterclockwise directions.

Furthermore, the length W2 in the optical axis direction (Z-axis direction) of the optical driving magnet may be greater than the movement distances MD2 and MD3 in the optical axis direction of the lens assembly. That is, the length W2 in the optical axis direction (Z-axis direction) of the optical driving magnet may be greater than the maximum movement distance of the first lens assembly or the maximum movement distance of the second lens assembly. With this configuration, a driving force for movement in the optical axis direction may be safely provided.

Furthermore, as described above, the plurality of lens assemblies may be provided, and the rearmost lens assembly among the plurality of lens assemblies may have a greater distance of movement in the optical axis direction than the frontmost lens assembly among the plurality of lens assemblies.

For example, the movement distance MD2 in the optical axis direction of the first lens assembly 1222a may be smaller than the movement distance MD3 in the optical axis direction of the second lens assembly 1222b. In other words, the movement distance in the optical axis direction of the second lens assembly 1222b may be greater than the movement distance in the optical axis direction of the first lens assembly. The first lens assembly 1222a may be located at a front end of the second lens assembly 1222b.

Furthermore, in the camera actuator according to the embodiment, the optical driving magnet 1252a may move from a 'center' to 'maximum movement l' or 'maximum movement 2.' Here, in the case of the 'center,' the optical driving magnet 1252a may overlap the first sub-coil SC1a and the second sub-coil SC2a in the second direction. In other words, the first sub-coil SC1a and the second sub-coil SC2a may both face the optical driving magnet.

Further, since the sub-coils are coils extending in the first direction in which the driving force due to an actual electromagnetic force is provided, a region where the first sub-coil SC1a and the optical driving magnet 1252a overlap may be the same as a region where the second sub-coil SC2a and the optical driving magnet 1252a overlap. Thus, the generation of a counter electromotive force is minimized, enabling a long stroke to be implemented.

Further, a case of 'maximum movement l' may correspond to a case in which the optical driving magnet 1252a maximally moves in a direction opposite to the third direction (Z-axis direction). At this time, in the optical driving magnet 1252a, a region in which the optical driving magnet 1252a and the first sub-coil SC1a overlap may be greater than a region in which the optical driving magnet 1252a and the second sub-coil SC2a overlap. Furthermore, the optical driving magnet 1252a and the inner hole of the first sub-coil SC1a may overlap at least partially. More specifically, the optical driving magnets 1252a may be spaced apart in the optical axis direction from the edge of the inner hole of the first sub-coil SC1a by a predetermined separation distance GP2. With this configuration, the counter electromotive force generated at an end portion of the first sub-coil SC1a may be reduced. For example, the optical driving magnet 1252a may move with a maximum stroke to a region where the optical driving magnet 1252a and an end portion in a direction opposite to the optical axis direction of the first sub-coil SC1a do not overlap in the second direction (Y-axis direction).

Further, a case of 'maximum movement 2' may correspond to a case in which the optical driving magnet 1252a maximally moves in the third direction (Z-axis direction). At this time, in the optical driving magnet 1252a, a region in which the optical driving magnet 1252a and the second sub-coil SC2a overlap may be greater than a region in which the optical driving magnet 1252a and the first sub-coil SC1a overlap. Furthermore, the optical driving magnet 1252a and the inner hole of the second sub-coil SC2a may overlap at least partially. More specifically, the optical driving magnet 1252a may be spaced apart in the optical axis direction from the edge of the inner hole of the second sub-coil SC2a by a predetermined separation distance GP1. With this configuration, the counter electromotive force generated at an end portion of the second sub-coil SC2a may be reduced. For example, the optical driving magnet 1252a may move with a maximum stroke to a region where the optical driving magnet 1252a and an end portion in a direction opposite to the optical axis direction of the second sub-coil SC2a do not overlap in the second direction (Y-axis direction).

Accordingly, even when a small length in the optical axis direction of the optical driving magnet 1252a is provided, the long stroke of the camera actuator may be efficiently implemented through the single-pole magnetization and the direction of the current in the plurality of optical driving coils.

Furthermore, the maximum movement distance of the optical driving magnet 1252a may correspond to the lengths in the optical axis direction of the first and second recesses for accommodating the first ball or the second ball in the first lens assembly described above. Furthermore, the maximum movement distance of the optical driving magnet 1252a may correspond to a distance in which the optical driving magnet 1252a moves from maximum movement 1 to maximum movement 2 in the optical axis direction (Z-axis direction). Alternatively, the maximum movement distance of the optical driving magnet 1252a may correspond to an interval between the stoppers that limit the movement in the optical axis direction of the first ball or the second ball. Alternatively, the maximum movement distance of the optical driving magnet 1252a may correspond to the maximum distance that the bobbin may move and may correspond to the separation distance in the optical axis direction between the stopper located in the optical axis direction with respect to the bobbin and the stopper located in a direction opposite to the optical axis direction.

Furthermore, the maximum movement distance of the optical driving magnet 1252a may correspond to twice the distance in which the optical driving magnet 1252a moves from the center to maximum movement 1. Further, the movement distance of the optical driving magnet 1252a according to the embodiment may be from -6 mm to +6 mm with respect to the center. Here, '+' is attached to a movement distance in the optical axis direction from the center, and '-' is attached to a movement distance in a direction opposite to the optical axis direction. Accordingly, the optical driving magnet 1252a (or at least one of the first lens assembly and the second lens assembly) according to the embodiment may move in the range of 0 mm to 12 mm in the optical axis direction. Furthermore, the maximum movement distance described above may correspond to the maximum stroke of the lens assembly in the camera module.

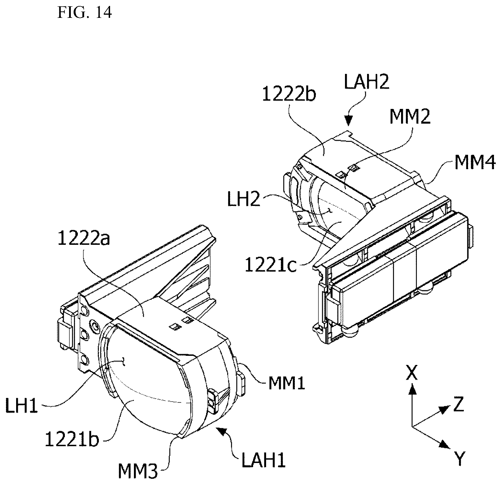

FIG. 14 is a perspective view of a first lens assembly, a first coupling member, a second coupling member, and a second lens assembly according to the embodiment.

Referring to FIG. 14, the first lens assembly 1222a and the second lens assembly 1222b may be arranged spaced apart in the optical axis direction (Z-axis direction). Further, the first lens assembly 1222a and the second lens assembly 1222b may move in the optical axis direction (Z-axis direction) using the driving unit. For example, an auto-focus or zoom function may be performed through the movement of the first lens assembly 1222a and the second lens assembly 1222b.

Furthermore, the first lens assembly 1222a may include a first lens holder LAH1 that holds and couples the second lens group 1221b. The first lens holder LAH1 may be coupled to the second lens group 1221b. Furthermore, the first lens holder LAH1 may include a first lens hole LH1 for accommodating the second lens group 1221b. That is, the second lens group 1221b including one or more lenses may be disposed in the first lens hole LH1. The first lens holder LAH1 is the same as accommodating portions (for example, a first accommodating portion and a second accommodating portion) described below and may be used interchangeably with the accommodating portions.

Further, the second lens assembly 1222b may include a second lens holder LAH2 that holds and couples the third lens group 1221c. Furthermore, the second lens holder LAH2 may include a second lens hole LH2 for accommodating the third lens group 1221c. That is, one or more lenses may be disposed in the second lens hole LH2.

In an embodiment, the first lens assembly 1222a and the second lens assembly 1222b may include outer surfaces adjacent to each other. The first lens assembly 1222a may include a first outer surface MM1, and the second lens assembly 1222b may include a second outer surface MM2. The first outer surface MM1 may be a bottom surface of the first lens holder LAH1 with respect to the optical axis direction (Z-axis direction). Further, a third outer surface MM3 described below may be an upper surface of the first lens holder LAH1. Further, the second outer surface MM2 may be an upper surface of the second lens holder LAH2, and a fourth outer surface MM4 may be a bottom surface of the second lens holder LAH2.

Further, the first outer surface MM1 and the second outer surface MM2 may overlap at least partially in the optical axis direction (Z-axis direction). In an embodiment, the first outer surface MM1 to the fourth outer surface MM4 may at least partially overlap each other in the optical axis direction (Z-axis direction).

For example, the coupling member (not shown) may come into contact with at least one of the first outer surface MM1 and the second outer surface MM2.

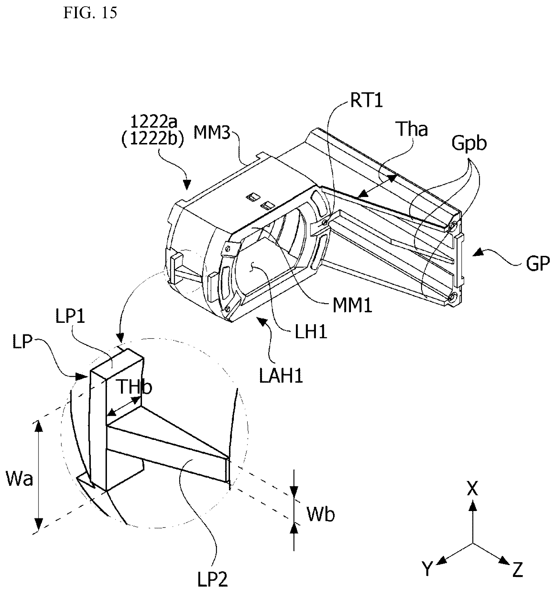

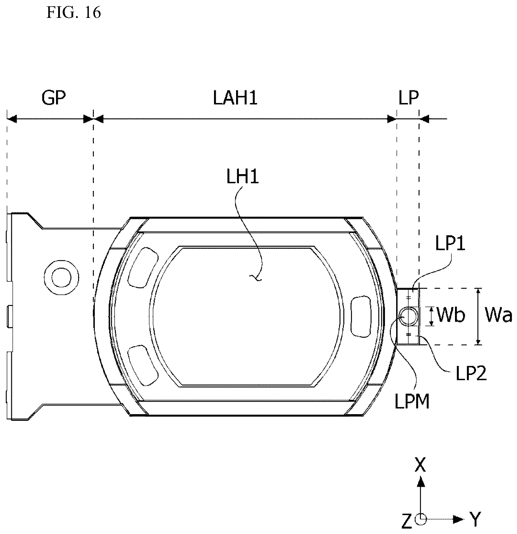

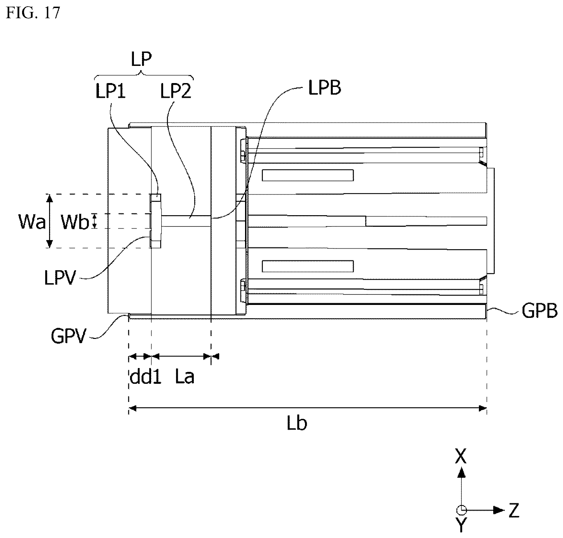

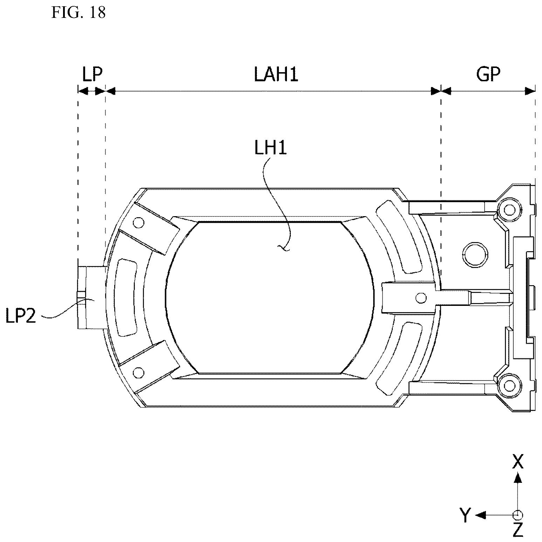

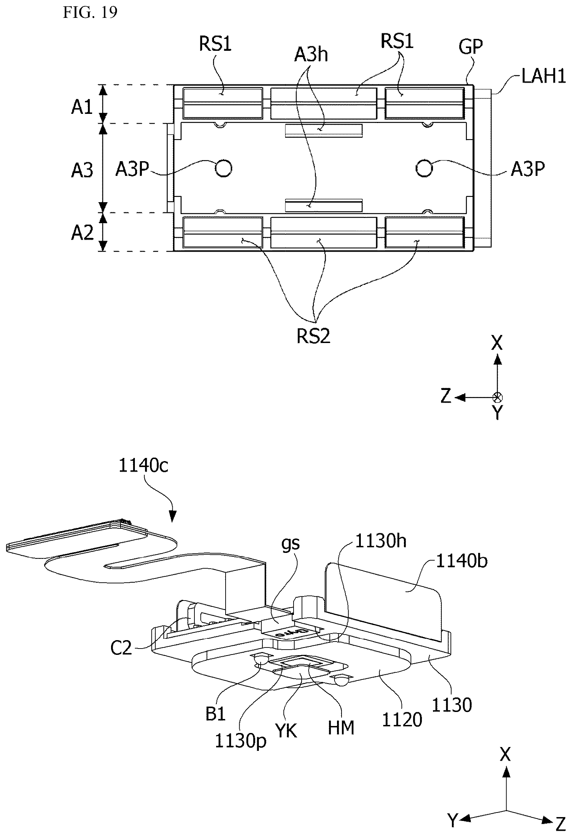

FIG. 15 is a perspective view of the first lens assembly (or second lens assembly) according to the embodiment, FIG. 16 is a front view of the first lens assembly (or second lens assembly) according to the embodiment, FIG. 17 is a side view of the first lens assembly (or second lens assembly) according to the embodiment, FIG. 18 is a rear view of the first lens assembly (or second lens assembly) according to the embodiment, and FIG. 19 is another side view of the first lens assembly (or second lens assembly) according to the embodiment.

Referring to FIG. 15, as described above, the first lens assembly 1222a and the second lens assembly 1222a may move in the optical axis direction or the third direction (Z-axis direction). Although the description is based on the first lens assembly 1222a in the following description, the description of the first lens assembly can be equally applied to the second lens assembly 1222a. Furthermore, the first lens assembly 1222a and the second lens assembly 1222a may be arranged side by side along the optical axis, and the guiding units thereof may be located on sides facing each other. For example, the first lens assembly 1222a and the second lens assembly 1222a may be positioned in a flipped-over or corresponding manner with respect to the optical axis.

Further, at least one of the first lens assembly 1222a and the second lens assembly 1222b may include an accommodating portion (lens holder, LAH1) for accommodating a lens, a guiding unit GP, and a lens protrusion portion LP. The following description is made based on the first lens assembly 1222a as described above.

The accommodating portion or the first lens holder LAH1 may include a first lens hole LH1. The following description is made as the accommodating portion LAH1. Further, a lens may be disposed in the first lens hole LH1. In this case, a plurality of lenses may be provided, for example, one or more lenses may be made of glass or the like.

Furthermore, the guiding unit GP may come into contact with the accommodating portion LAH1 and a ball portion may be disposed therein. As described above, the ball portion may include a first ball and a second ball. Further, the first ball and the second ball may be located or seated in the first lens assembly 1222a and the guide grooves. Thus, when a driving force (for example, electromagnetic force) is generated by the driving unit, the first lens assembly 1222a may move in the optical axis direction by the rolling motion of the first ball and the second ball.

The lens protrusion portion LP may come into contact with the accommodating portion LAH1 and may correspond to the guiding unit GP.

In an embodiment, the guiding unit GP may be located on one side surface or one side portion of the accommodating portion LAH1. Further, the lens protrusion portion LP may be located on the other side surface or the other side portion of the accommodating portion LAH1. For example, the guiding unit GP may be positioned opposite to the lens protrusion portion LP with respect to the accommodating portion LAH1.

Furthermore, the lens protrusion portion LP according to the embodiment may include a plate LP1 and a support portion LP2. The plate LP1 may be located at a front end of the support portion LP2. Further, the support portion LP2 may be coupled to the plate LP1 and located at a rear end of the plate LP1. Here, the front end refers to an end in a direction opposite to the optical axis direction, and the rear end refers to an end in the optical axis direction.

Further, a height Wa of the plate LP1 may be greater than a height Wb of the support portion LP2. Here, the height corresponds to a length in the first direction (X-axis). Furthermore, a thickness THb of the lens protrusion portion LP or the support portion LP2 may decrease along the optical axis. Here, the thickness corresponds to a length in the second direction (Y-axis direction). Furthermore, the length corresponds to a length in the third direction (Z-axis direction). With this structure, drawing can be easily achieved while maintaining a supporting force for the plate LP1. In addition, a supporting force for a first pin groove located in the plate LP1 may be improved so that flatness is easily maintained during drawing.

Furthermore, a length of the plate PL1 according to the embodiment may be smaller than a length of the support portion LP2. Accordingly, the ease of drawing and the supporting force may be further improved.

Furthermore, the guiding unit GP according to the embodiment may include a side plate GPa and wing portions GPb. The wing portions GPb may come into contact with both the side plate GPa and the accommodating portion LAH1. The wing portions GPb may have a thickness THa that decreases in the optical axis direction. Furthermore, a plurality of wing portions GPb may be provided. With this configuration, drawing can be easily achieved while maintaining the supporting force for the side plate GPa. In addition, a supporting force for a second pin groove located in the side plate GPa is improved, making it easy to maintain flatness during drawing.

Furthermore, a retainer RT1 may be located on a first outer surface MM1 of the first lens assembly 1222a. The first lens assembly and the second lens assembly may have retainers located on outer faces (first and second outer faces) that face each other. The retainer RT1 may be coupled to the first outer surface MM1 through a protrusion/groove structure. Furthermore, a coupling member including an epoxy or the like may be applied to the first outer surface MM1. Thus, the coupling force between the first outer surface MM1 and the retainer RT1 may be improved. The retainer RT1 may prevent the lens located in the first lens hole LH1 from escaping. Furthermore, a plurality of grooves or protrusions are formed on the first outer surface MM!. In addition, a plurality of marks (for example, grooves) may be located on a side surface of the first lens assembly 1222a in the first direction. The positions of the first and second lens assemblies may be recognized through the marks, and inspection of the driving of the first and second lens assemblies may be performed using the recognition.

Referring to FIGS. 16 to 18, in an embodiment, the lens protrusion portion LP may include a first pin groove LPG disposed in an upper surface LPU of the plate LP1. The first pin groove LPG may be located in the center of the upper surface LPU of the plate LP1. For example, the first pin groove LPG may be located in a portion or a line bisecting the upper surface LPU of the plate LP1 in the first direction (X-axis direction). Furthermore, a center LPM of the first pin groove LPG may be located on the line bisecting the upper surface LPU of the plate LP1 in the first direction (X-axis direction). A shape of the first pin groove LPG may be various shapes such as a circular shape and a block shape. For example, the shape of the first pin groove LPG may correspond to a shape of a push pin.

The first pin groove LPG and the support portion LP2 may overlap in the optical axis direction or the third direction (Z-axis direction). With this configuration, the flatness of the first lens assembly can be maintained even when a force is applied by the push pin to the first pin groove LPG side with which the push pin comes into close contact to perform drawing.

Furthermore, according to the embodiment, a length Lb in the third direction of the guiding unit GP may be greater than a length La in the third direction of the lens protrusion portion LP. On the other hand, the length La of the lens protrusion portion LP may be smaller than the length Lb of the guiding unit GP.

Furthermore, an upper surface GPU of the guiding unit GP may be located at a front end of an upper surface LPU of the lens protrusion portion LP. Furthermore, a lower surface GPB of the guiding unit GP may be disposed at a rear end of a lower surface LPB of the lens protrusion portion LP. Further, a length in the first direction of the guiding unit GP may be greater than a length in the first direction of the lens protrusion portion LP. Thus, the lengths of the guiding portion GP may be greater than the lengths of the lens protrusion portion LP in both the first and third directions.

Referring further to FIG. 19, according to the embodiment, the side plate GPa of the guiding unit GP includes a first region A1, a second region A2, and a third region A3.

The third region A3 is disposed between the first region A1 and the second region A2. Further, the first region A1, the third region A3, and the second region A2 may be sequentially located in a direction opposite to the first direction.

The first region A1 may include first recesses RS1. Further, the second region A2 may include second recesses RS2. A first ball and a second ball may be seated in the first recess RS1 and the second recess RS2. For example, the first balls may be located in the first and second recesses of the first lens assembly. Further, the second balls may be located in the first and second recesses of the second lens assembly.

Furthermore, a driving yoke may be disposed in the third region A3. The driving yoke may have a first magnet seated therein. The driving yoke may be seated in the third region A3 and coupled to the guiding unit GP. For example, the driving yoke may be coupled to the side plate GPa. For this purpose, yoke holes A3h or connecting protrusions A3p may be further arranged in the third region A3. The side plate GPa and the driving yoke may be coupled to each other through the yoke holes A3h or connecting protrusions A3p. In addition, a coupling member (for example, an epoxy or the like) may further be applied to the third region A3.

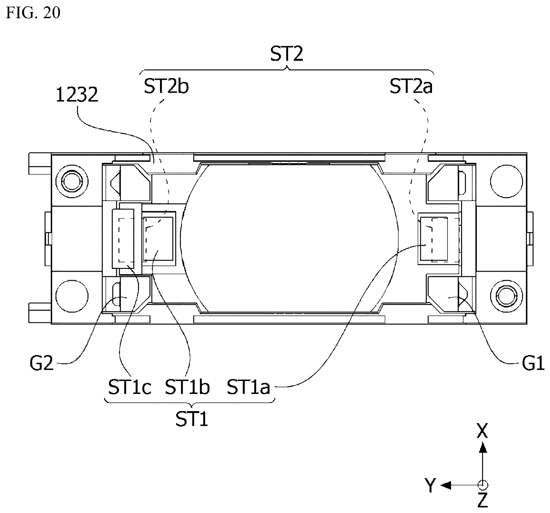

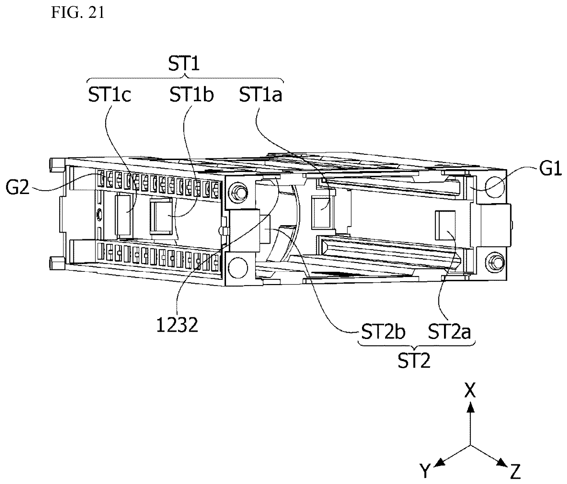

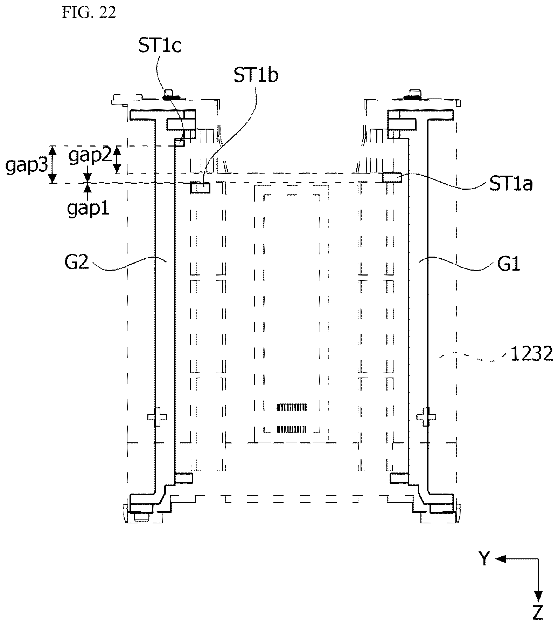

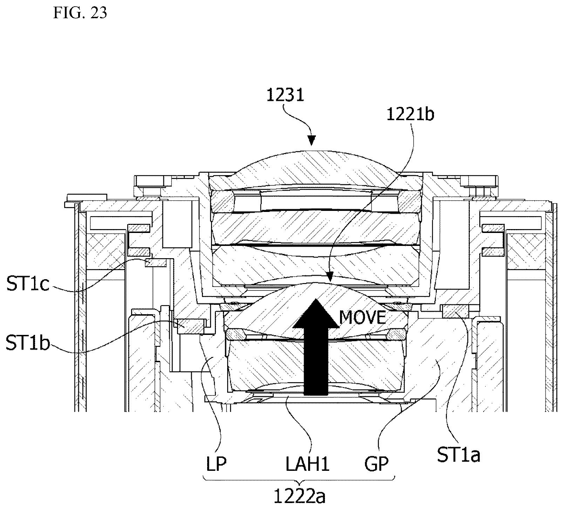

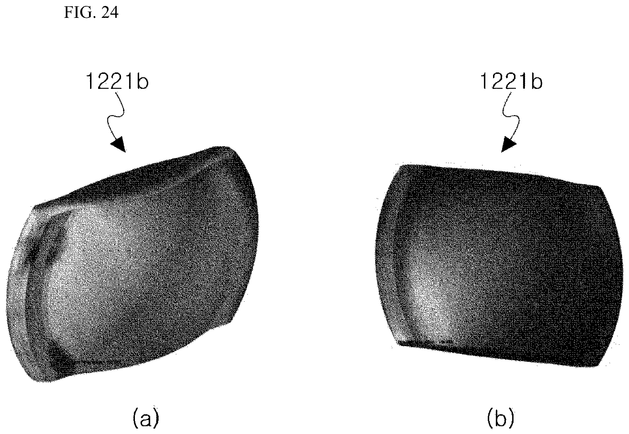

FIG. 20 is a view showing a housing, a guide unit, and stoppers in the second camera actuator according to the embodiment, FIG. 21 is a perspective view of FIG. 20, FIG. 22 is a side view of FIG. 20, FIG. 23 is an enlarged cross-sectional view of FIG. 20, and FIG. 24 is a view for describing the effects of stoppers in the second camera actuator according to the embodiment.

Referring to FIGS. 20 to 23, the 1-1 stopper ST1a and the 1-2 ST1b may be arranged spaced apart from each other in the second direction or the third direction. That is, the 1-1 stopper ST1a and the 1-2 stopper ST1b may be arranged to be spaced a predetermined distance apart in the second direction. Further, the 1-1 stopper ST1a and the 1-2 stopper ST1b may be arranged to be spaced a predetermined distance gap1 apart in the third direction. The predetermined distance gap1 may correspond to a separation distance in the optical axis direction of the lens protrusion portion and the guiding unit in the first lens assembly.

That is, a distance between the 1-1 stopper ST1a and the guiding unit GP of the first lens assembly 1222a may correspond to a distance between the 1-2 stopper ST1b and the lens protrusion portion LP of the first lens assembly 1222a.

With this configuration, when the first lens assembly 1222a moves to the maximum (mecha) in a direction opposite to the optical axis direction, the first lens assembly 1222a may simultaneously come into contact with the 1-1 stopper ST1a and the 1-2 stopper ST1b. Thus, the impact on the second lens group 1221b in the first lens assembly 1222a may be reduced.

Referring further to FIG. 24, FIG. 24A is a state of a lens (for example, glass) located at a front end of the second lens group when only the 1-1 stopper is present, and FIG. 24B is a state of a lens (for example, glass) located at a front end of the second lens group when both the 1-1 stopper and the 1-2 stopper are present.

As shown in the drawing, it can be seen that the impact is not concentrated on one side when both the 1-1 stopper and the 1-2 stopper are present. Thus, material deformation (for example, cracking or the like) and destruction of the first and second lens assemblies moving over long distances or long strokes may be reduced.

**[Table 1]**

| Stress direction (Direction) | +X | -X | +Y | -Y | +Z | -Z |
|---|---|---|---|---|---|---|
| FIG. 24A | 100 Mpa | 70 Mpa | 64 Mpa | 61 Mpa | 104 Mpa | 197 Mpa |
| FIG. 24B | 97 Mpa | 61 Mpa | 57 Mpa | 52 Mpa | 97 Mpa | 115 Mpa |

Referring to Table 1, the experimental results for the impact applied to the second lens group when a drop test was performed in the vertical, horizontal, and optical axis directions are shown. As described in the Table, when the drop test was performed in a direction opposite to the optical axis direction, it was found that the impact applied to the second lens group was significantly reduced. Furthermore, the 1-3 stopper ST1c may be disposed spaced apart from the 1-1 stopper ST1a and the 1-2 stop ST1b in the second direction (Y-axis direction) or the third direction. The 1-1 stopper ST1a may be disposed to be spaced a predetermined distance apart from the 1-3 stopper ST1c in the second direction (Y-axis direction). Further, the 1-1 stopper ST1a may be disposed to be spaced a predetermined distance gap2 apart from the 1-3 stopper ST1c in the third direction or the optical axis direction.

Further, the 1-2 stopper ST1b and the 1-3 stopper ST1c may be arranged to be spaced a predetermined distance apart in the second direction (Y-axis direction). Further, the 1-2 stopper ST1b and the 1-3 stopper ST1c may be arranged to be spaced a predetermined distance gap3 apart in the third direction or the optical axis direction.

The 1-1 stopper ST1a, the 1-2 stopper ST1b, and the 1-3 stopper ST1c may be arranged offset in the horizontal direction or the second direction. The 1-1 stopper ST1a, the 1-2 stopper ST1b, and the 1-3 stopper ST1c may not overlap in the horizontal direction or the second direction.

The 1-1 stopper ST1a may be located between the 1-3 stopper ST1c and the 1-2 stopper ST1b.

Thus, a shape of the first lens assembly may provide improved drawing while ensuring the reliability of the second lens group. Furthermore, the reliability of the second lens assembly may be ensured.

**[Table 2]**

| Compressible amount of 1-1 stopper | Compressible amount of 1-2 stopper | Case # | Maximum stress (Max Stress, PORON collision) | Compression ratio of 1-1 stopper | Compression ratio of 1-2 stopper |
|---|---|---|---|---|---|
| 400 | 400 | 3 | 161 | 80% | 80% |
| 300 | 300 | 2 | 162 | 60% | 60% |
| 250 | 300 | 7 | 133 | 50% | 60% |
| 250 | 250 | 6 | 134 | 50% | 50% |
| 250 | 200 | 8 | 158 | 50% | 40% |
| 200 | 250 | 4 | 152 | 40% | 50% |
| 200 | 200 | 5 | 165 | 40% | 40% |
| 200 | 150 | 1 | 213 | 40% | 30% |

Additionally, the 1-1 stopper ST1a and the 1-2 stopper ST1b may have equal or different lengths or thicknesses in the optical axis direction. For example, a thickness of the 1-2 stopper ST1b may be greater than a thickness of the 1-1 stopper ST1a. Accordingly, an amount of impact applied to the lens protrusion portion of the first lens assembly, which has a relatively smaller area than the guiding unit, may be reduced. Thus, the reliability of the first lens assembly may be improved. In addition, as shown in Table 2, the 1-1 stopper and the 1-2 stopper may be made of PORON. Further, the 1-1 stopper and the 1-2 stopper may have the same or similar thickness. For example, the 1-1 stopper and the 1-2 stopper may have a thickness of 350 to 650 um. For example, a thickness of the 1-1 stopper and the 1-2 stopper may be 500 µm. Further, the 1-1 stopper and the 1-2 stopper may have an elastic modulus of 20 to 40 Mpa. At this time, it can be seen that the stress applied to the lens assembly in Cases 6 and 7 of Table 2 is significantly reduced. For example, the 1-1 stopper and the 1-2 stopper may have a compression ratio of 1:1 to 1:1.2. Additionally, the 1-1 and 1-2 stoppers may have a compressible amount of 1:1 to 1:1.2. That is, low stress may be provided when the compression ratio of the 1-1 stopper and the 1-2 stopper is within 50%. In addition, a distance between the 2-2 stopper ST2b and the second lens assembly 1222b may correspond to a distance between the 2-1 stopper ST2a and the second lens assembly 1222b. Accordingly, the reliability of the third lens group in the second lens assembly may be secured. In addition, the 2-1 stopper ST2a and the 2-2 stopper ST2b may horizontally overlap. In this way, the balance of the second camera actuator may be improved.

Further, the 2-1 stopper ST2a and the 1-1 stopper ST1a may overlap at least partially in the optical axis direction. Accordingly, the main barrel 1232 may be easily injection-molded and the bending phenomenon may be suppressed.

Furthermore, the 2-2 stopper ST2b and the 2-3 stopper ST1c may overlap in the optical axis direction. Further, the 2-2 stopper ST2b may be offset from the 1-2 stopper ST1b in the optical axis direction. The 2-2 stopper ST2b and the 1-2 stopper ST1b may not overlap in the optical axis direction. In this way, when the second lens assembly moves, the impact applied to the second lens assembly may be applied to the overlapping position in the optical axis direction so that bending phenomena or the like is suppressed and reliability is improved.

Furthermore, the 1-1 stopper ST1a or the 1-2 stopper ST1b may be located between the 1-3 stopper ST1c and the 2-2 stopper ST2b. Further, the 1-1 stopper ST1a or the 1-2 stopper ST1b may be located between the 1-3 stopper ST1c and the 2-1 stopper ST2a.

Furthermore, at least a part of the 2-2 stopper ST2b, the 1-1 stopper ST1a, and the 1-2 stopper ST1b may be located between the 1-3 stopper ST1c and the 2-1 stopper ST2a.

Furthermore, the 1-1 stopper ST1a may be located at a rear end of the 1-3 stopper ST1c. Further, the 1-2 stopper ST1b may be located at a rear end of the 1-1 stopper ST1a. Further, the 2-1 stopper ST2a and the 2-2 stopper ST2b may be located at a rear end of the 1-2 stopper ST1b.

Furthermore, the 1-3 stoppers ST1c and the 2-2 stoppers ST2b may be positioned adjacent to the second guide unit G2. Further, the 2-1 stopper ST2a may be positioned adjacent to the first guide unit G1. The 1-1 stopper ST1a and the 1-2 stopper ST1b may be located inside the 2-1 stopper ST2a and the 2-2 stopper ST2b (or the 1-3 stopper).

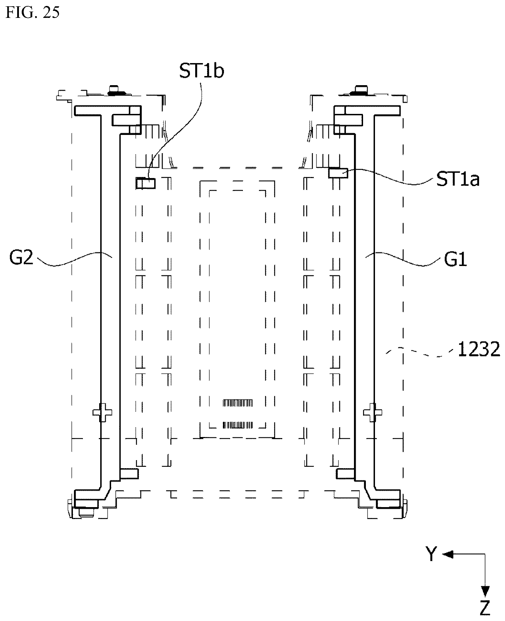

FIG. 25 is a modified example of FIG. 22.

Referring to FIG. 25, a second camera actuator (a camera device, a zoom lens transfer device, a zoom lens moving device, or a lens transfer device) according to the modified example may include a lens unit, a housing, a driving unit, a base unit, a substrate unit, and stoppers ST1 and ST2. The description of this can be equally applied, except for the above contents.

A first stopper ST1 may include a 1-1 stopper ST1a and a 1-2 stopper ST1b. That is, the 1-3 stopper ST1c described above may not be present. Accordingly, as described above, the reliability of the first lens assembly 1222a and the reliability of the lens may be secured.

Furthermore, the first stopper may include the 1-1 stopper ST1a and the 1-2 stopper ST1b disposed on both sides thereof so that the structural stability of the second camera actuator is improved.

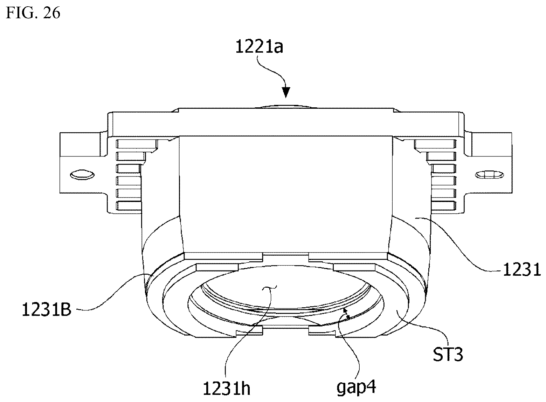

FIG. 26 is a perspective view of an additional member, a fixed assembly, and a first lens group in a second camera actuator according to another embodiment.

Referring to FIG. 26, the second camera actuator (a camera device, a zoom lens transfer device, a zoom lens moving device, or a lens transport device) according to another embodiment may include a lens unit, a housing, a driving unit, a base unit, a substrate unit, and stoppers ST1 and ST2. The description of this can be equally applied, except for the above contents.

A 2-1 housing or a fixed assembly 1231 may include a third stopper ST3 disposed on a lower surface 1231B. The third stopper ST3 may have a greater diameter than an accommodating hole 1231h of the fixed assembly 1231. Furthermore, the accommodating hole 1231h of the fixed assembly 1231 and an inner surface of the third stopper ST3 may be arranged to be spaced a predetermined distance gap4 apart. Accordingly, an effective diameter of the first lens group 1221a in the accommodating hole 1231h of the fixed assembly 1231 may be maximally secured.

When the first lens assembly moves to its maximum, the third stopper ST3 may come into contact with the first lens assembly. Thus, the third stopper ST3 may further improve the reliability of the first lens assembly together with the first stopper.

For example, the third stopper ST3 may have a stepped structure. Accordingly, the impact on the first lens assembly may be sequentially reduced.

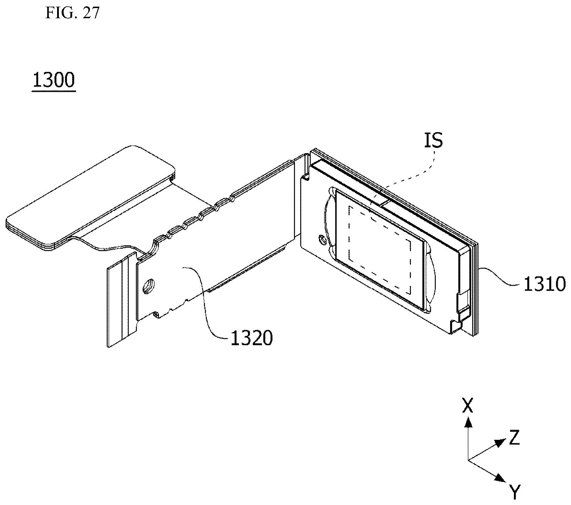

FIG. 27 is a schematic view showing a circuit board according to the embodiment.

Referring to FIG. 27, as described above, the circuit board 1300 according to the embodiment may include a first circuit board unit 1310 and a second circuit board unit 1320. The first circuit board unit 1310 may be located below a base and coupled to the base. Furthermore, an image sensor IS may be disposed on the first circuit board unit 1310. Further, the first circuit board unit 1310 and the image sensor IS may be electrically connected. That is, the base may be located at a rear end of the second camera actuator, and the image sensor and the circuit board (first circuit board unit) may be located at a rear end of the base. The base may include a filter (for example, an infrared filter or the like). The circuit board 1300 may include the image sensor and the sensor base described above.

Also, the second circuit board unit 1320 may be located on a side portion of the base. Particularly, the second circuit board unit 1320 may be located on a first side portion of the base. Accordingly, the second circuit board unit 1320 may be positioned adjacent to a first coil positioned adjacent to the first side portion to facilitate electrical connection. Additionally, the second circuit board unit 1320 may be located on a second side portion. In this way, a plurality of second circuit board units 1320 may be provided. However, the present invention is not limited thereto and the second circuit board unit 1320 may be disposed on only one of the first side portion and the second side portion.

Furthermore, the circuit board 1300 may additionally include a fixed board (not shown) located on a side surface thereof. Thus, even when the circuit board 1300 is made of a flexible material, the circuit board 1300 may be coupled to the base while maintaining rigidity due to the fixed board.

The second circuit board unit 1320 of the circuit board 1300 may be located on a side portion of a driving unit 1250. The circuit board 1300 may be electrically connected to a first driving unit and a driving unit. For example, electrical connection may be made using SMT. However, the present invention is not limited to such a method.

The circuit board 1300 may include a circuit board having electrically connectable wiring patterns, such as rigid printed circuit boards (rigid PCBs), flexible printed circuit boards (flexible PCBs), and rigid flexible printed circuit boards (rigid flexible PCBs). However, the present invention is not limited to these types.

Additionally, the circuit board 1300 may be electrically connected to another camera module in a terminal or a processor of the terminal. Through this, the camera actuator described above and the camera module including the same may transmit and receive various signals in the terminal.

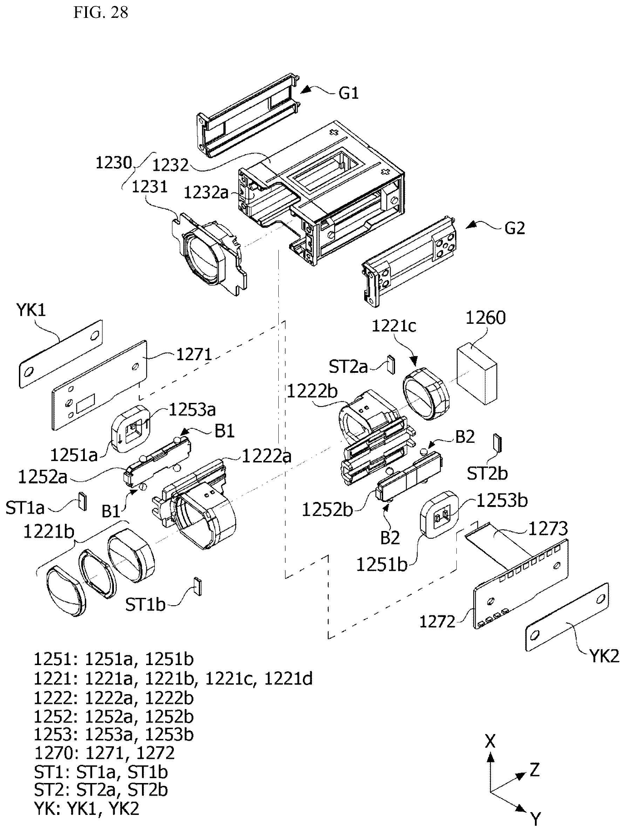

FIG. 28 is an exploded perspective view of a second camera actuator according to another embodiment.

Referring to FIG. 28, a second camera actuator 1200 (or a camera device, a zoom lens transfer device, a zoom lens moving device, or a lens transfer device) according to another embodiment may include a lens unit 1220, a housing 1230, a driving unit 1250, a base unit 1260, a substrate unit 1270, and stoppers ST1 and ST2. Furthermore, the second camera actuator 1200 may further include a shield can (not shown), elastic units (not shown), a trap unit (not shown), and a coupling member (not shown). The above contents can be equally applied, except for the following contents.

In this embodiment, a first guide unit G1 may include first guide grooves GG1a and GG1b facing first recesses RS1. Furthermore, a second guide unit G2 may include second guide grooves GG2a and GG2b facing second recesses RS2. The first guide grooves GG1a and GG1b and the second guide grooves GG2a and GG2b may be grooves extending in the third direction (Z-axis direction). Further, the first guide grooves GG1a and GG1b and the second guide grooves GG2a and GG2b may be grooves having different shapes. For example, at least one of the first guide grooves GG1a and GG1b and the second guide grooves GG2a and GG2b may be a groove with inclined side surfaces and the other thereof may be a groove with side surfaces perpendicular to a bottom surface thereof.

Furthermore, a plurality of first guide grooves GG1a and GG1b or a plurality of second guide grooves GG2a and GG2b may be provided. Further, a plurality of balls having at least some different diameters may be located in the plurality of guide grooves.

A first magnet and a first coil may be located on a first side portion. Further, a second magnet and a second coil may be located on a second side portion. Further, a second magnet 1252b may be positioned to face a second coil 1251b. Furthermore, a first magnet 1252a may be positioned to face a first coil 1251a.

A first stopper ST1 and a second stopper ST2 may limit a movement distance of a moving assembly and absorb impacts.

In an embodiment, a second yoke unit or a yoke unit YK may be disposed outside the driving unit. For example, the yoke unit YK may be disposed outside the first and second coils. A second yoke unit YK may include a first yoke YK1 and a second yoke YK2.

The first yoke YK1 and the second yoke YK2 may be disposed opposite to each other. For example, the first yoke YK1 and the second yoke YK2 may be positioned to correspond to each other with respect to the optical axis.

The first yoke YK1 may be positioned adjacent to the first coil 1251a. The second yoke YK2 may be positioned adjacent to the second coil 1251b. The first coil 1251a and the second coil 1251b may be located inside the first yoke YK1 and the second yoke YK2. Furthermore, the first yoke YK1, the first coil 1251a, the second coil 1251b, and the second yoke YK2 may be sequentially arranged in one direction (for example, the second direction). The first yoke YK1 may form an attractive force with the first magnet. Additionally, the second yoke YK2 may form an attractive force with the second magnet. Accordingly, the posture of the first and second lens assemblies may be maintained.

Furthermore, thicknesses of the first yoke YK1 and the second yoke YK2 may vary in some regions. With this configuration, it is possible to suppress the magnetic force generated from the first and second magnets or the first and second coils from affecting other magnets or coils. For example, the first yoke YK1 may inhibit the magnetic force generated by the first magnet from being applied to the second magnet or the second coil.

Furthermore, the trap unit may be located in a second housing or a main barrel 1232. With this configuration, foreign matter (for example, dust) generated by the impact between components (for example, an impact between the lens assembly and the main barrel) may be captured by the trap unit. Accordingly, the deterioration of driving performance by foreign matter may be suppressed. A detailed description of the trap unit will be provided below.

Furthermore, the trap unit may include grease or a dust trap agent. For example, the trap unit may include a polymeric adhesive material. The trap unit may include polymethyl methacrylate (PMMA). Furthermore, the trap unit may include a resin. Accordingly, only an adhesive material remains after coating, allowing foreign matter to be captured.

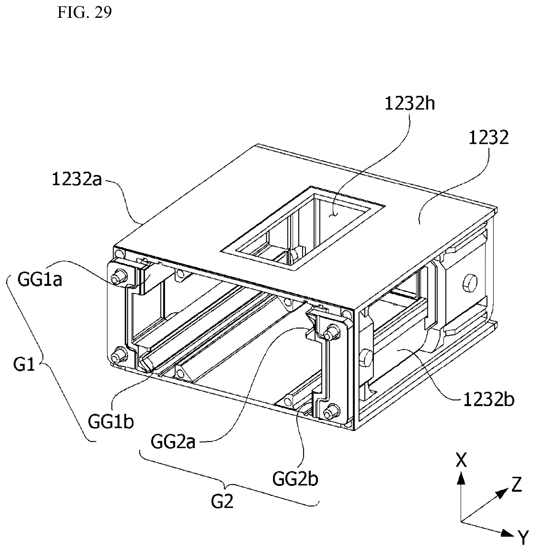

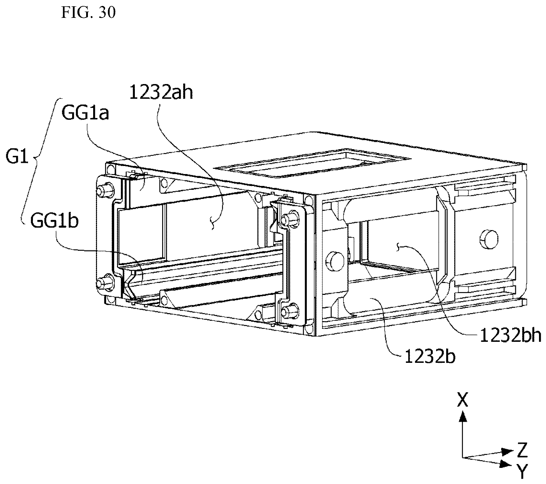

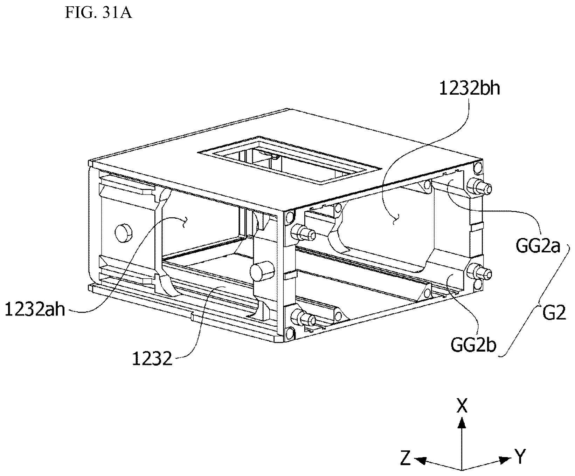

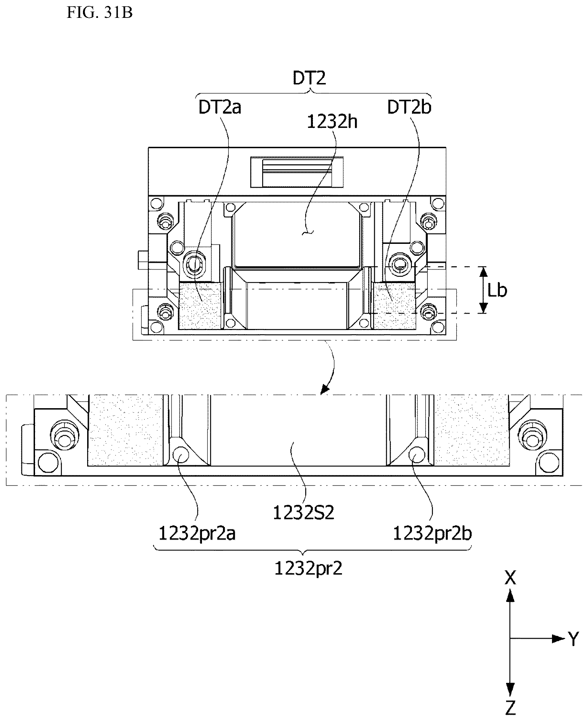

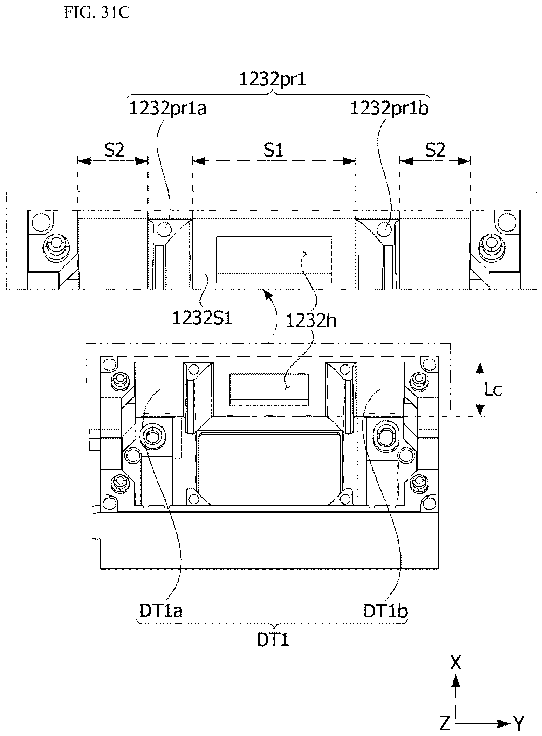

FIGS. 29, 30, and 31A are perspective views of the main barrel and the trap unit in the second camera actuator according to another embodiment, FIG. 31B is a perspective view of the main barrel and the trap unit according to the embodiment, and FIG. 31C is a perspective view of FIG. 31B when viewed in another direction.

Referring to FIGS. 29, 30 and 31A, as described above, a second housing 1230 (particularly, the 2-2 housing 1232) may include a first side portion 1232a and a second side portion 1232b. The first side portion 1232a and the second side portion 1232b may be positioned to correspond to each other. For example, the first side portion 1232a and the second side portion 1232b may be symmetrically disposed with respect to the third direction. A second driving coil may be located in the first side portion 1232a and the second side portion 1232b. Further, a second substrate unit may be seated on outer surfaces of the first side portion 1232a and the second side portion 1232b. The second substrate unit may be located outside the driving coil and electrically connected to the driving coil.

For example, a first substrate may be located on an outer surface of the first side portion 1232a, and a second substrate may be located on an outer surface of the second side portion 1232b.

Furthermore, first guide grooves GG1a and GG1b in which a first ball and a second ball are seated may be located in an inner surface of the first side portion 1232a. The first guide grooves GG1a and GG1b may face the first and second recesses described above. Similarly, second guide grooves GG2a and GG2b in which the first ball and the second ball are seated may be located in an inner surface of the second side portion 1232b. The first guide grooves GG1a and GG1b may face the first and second recesses described above.

Furthermore, the first side portion 1232a may include a first side hole 1232ah. The first magnet may be located in the first side hole 1232ah. Furthermore, the first side hole 1232ah may have a smaller length in the second direction than the first coil.

Further, the second side portion 1232b may include a second side hole 1232bh. A fourth magnet may be located in the second side hole 1232bh. Furthermore, the second side hole 1232bh may have a smaller length in the second direction than the second coil.

Furthermore, the 2-2 housing 1232 may include a housing hole 1232h disposed in any one of upper and lower portions thereof. Through the housing hole 1232h, the combination may be easily achieved or inspection (for example, visual inspection) of the first lens assembly and the second lens assembly may be performed.

Further, the first guide grooves GG1a and GG1b located in the first side portion 1232a may extend in the third direction. Furthermore, the first guide grooves GG1a and GG1b may have different shapes. For example, one first guide groove GG1a of the first guide grooves may be an inclined groove, and the other guide groove GG1b may have a flat structure. This can be equally applied to the second guide grooves GG2a and GG2b. The first and second balls are seated in the inclined groove and the flat structure so that the first lens assembly or the second lens assembly may move in the optical axis direction.

Referring to FIGS. 31B and 31C, the 2-2 housing or the main barrel 1232 according to the embodiment may include a housing opening portion 1232h in the upper surface thereof, as described above.

Furthermore, the main barrel 1232 may include an inner surface facing the upper or lower surface of the moving assembly and having a housing protrusion formed thereon. Further, the housing protrusion may be located on an inner surface facing an upper surface or a lower surface of the first lens assembly or the second lens assembly. For example, the upper surface and the lower surface may be opposing surfaces in the first direction or the vertical direction. Further, the housing protrusion will be described below based on the first lens assembly, but can be equally applied to the second lens assembly. Here, since the first lens assembly and the second lens assembly are arranged symmetrically with respect to the optical axis direction or the optical axis, the following description can be applied interchangeably in consideration of the opposite structures thereof. Further, the inner surface may include a first inner surface 1232S1 and a second inner surface 1232S2 which will be described below. The first inner surface 1232S1 may be an upper surface of the inner surfaces of the main barrel 1232. Further, the second inner surface 1232S2 may be a lower surface of the inner surfaces of the main barrel 1232. In the main barrel 1232, the first inner surface 1232S1 and the second inner surface 1232S2 may be positioned to face each other. For example, the first inner surface 1232S1 and the second inner surface 1232S2 may overlap each other in the vertical direction or the first direction.

Further, the trap unit may be located between the housing protrusion and the first guide unit on the inner surface thereof. Trap units DT1 and DT2 may include a first trap unit DT1 disposed on the first inner surface 1232S1 and a second trap unit DT2 disposed on the second inner surface 1232S2. The first trap unit DT1 may be located on the first inner surface 1232S1 between a first housing protrusion 1232pr1a and the first guide unit or between a second sub-housing protrusion 1232pr1b and the second guide unit.

In an embodiment, the first inner surface 1232S1 facing the upper surface of the first lens assembly may include a first protrusion or a first housing protrusion 1232pr1 extending in the vertical direction . The first housing protrusion 1232pr1 may extend downward. Furthermore, the first housing protrusion 1232pr1 may include the first sub-housing protrusion 1232pr1a and the second sub-housing protrusion 1232pr1b. In a modified example, only the first sub-housing protrusion 1232pr1a may be located on the first inner surface 1232S1. Here, the following description is made based on the first housing protrusion 1232pr1 including the first sub-housing protrusion 1232pr1a and the second sub-housing protrusion 1232pr1b.

The first sub-housing protrusion 1232pr1a and the second sub-housing protrusion 1232pr1b may be arranged spaced apart from each other in the horizontal direction (Y-axis direction). A separation distance in the horizontal direction between the first sub-housing protrusion 1232pr1a and the second sub-housing protrusion 1232pr1b may be greater than a length in the horizontal direction of the housing opening portion 1232h. Accordingly, the impact between the lens assembly and the housing may be reduced independently of the inspection of the first lens assembly and the second lens assembly.

Furthermore, lengths Lb and Lc in the optical axis direction of the first housing protrusion 1232pr1 or the second housing protrusion 1232pr2 which will be described below may be greater than a length in the optical axis direction of the first lens assembly. Additionally, the lengths Lb and Lc in the optical axis direction of the first housing protrusion 1232pr1 or the second housing protrusion 1232pr2 may be greater than a length in the optical axis direction of a wing portion of the first lens assembly. In other words, the lengths Lb and Lc in the optical axis direction of the first housing protrusion 1232pr1 or the second housing protrusion 1232pr2 may be greater than the maximum length in the optical axis direction of the first lens assembly. Furthermore, the lengths Lb and Lc in the optical axis direction of the first housing protrusion 1232pr1 or the second housing protrusion 1232pr2 may be greater than the length in the optical axis direction of the first lens holder.

Furthermore, the lengths Lb and Lc in the optical axis direction of the first housing protrusion 1232pr1 or the second housing protrusion 1232pr2 may be greater than the length in the optical axis direction of the second lens assembly. With this configuration, an amount of impact between the first and second lens assemblies and the main barrel 1232 can be reduced throughout the entire range of movement of the first and second lens assemblies.

Furthermore, an outer surface of the first sub-housing protrusion 1232PR1 may be perpendicular to the horizontal direction, and an extension surface of the first sub-housing protrusion 1232pr1 may be perpendicular to the vertical direction.

Furthermore, the second inner surface 1232S2 of the main barrel 1232 facing a lower surface of the first lens assembly may include a second protrusion or a second housing protrusion 1232pr2 extending in the vertical direction. The second housing protrusion 1232pr2 may extend upward. Furthermore, the second housing protrusion 1232pr2 may include a third sub-housing protrusion 1232pr2a and a fourth sub-housing protrusion 1232pr2b.

In an embodiment, the third sub-housing protrusion 1232pr2a and the fourth sub-housing protrusion 1232pr2b may be arranged spaced apart from each other in the horizontal direction. Furthermore, a separation distance in the horizontal direction between the third sub-housing protrusion 1232pr2a and the fourth sub-housing protrusion 1232pr2b may be greater than a length in the horizontal direction of the housing opening portion 1232h.

Furthermore, the separation distance in the horizontal direction between the third sub-housing protrusion 1232pr2a and the fourth sub-housing protrusion 1232pr2b may be the same as or different from the separation distance in the horizontal direction between the first sub-housing protrusion 1232pr1a and the second sub-housing protrusion 1232pr1b.

For example, the separation distance in the horizontal direction between the third sub-housing protrusion 1232pr2a and the fourth sub-housing protrusion 1232pr2b may be the same as the separation distance in the horizontal direction between the first sub-housing protrusion 1232pr1a and the second sub-housing protrusion 1232pr1b. Accordingly, the first housing protrusion 1232pr1 and the second housing protrusion 1232pr2 may at least partially overlap each other in the vertical direction. With this configuration, the reliability against impact can be improved.

In a modified example, the separation distance in the horizontal direction between the third sub-housing protrusion 1232pr2a and the fourth sub-housing protrusion 1232pr2b may be different from the separation distance in the horizontal direction between the first sub-housing protrusion 1232pr1a and the second sub-housing protrusion 1232pr1b. Accordingly, the first sub-housing protrusion 1232pr1a and the third sub-housing protrusion 1232pr2a may not overlap at least partially in the vertical direction. Furthermore, the second sub-housing protrusion 1232pr1b and the fourth sub-housing protrusion 1232pr2b may not overlap at least partially in the vertical direction. With this configuration, an impact can be easily dispersed.

Additionally, in the second camera actuator described above, the first lens assembly may have first and second assembly protrusions, and the second housing may have first and second housing protrusions. Furthermore, the first and second assembly protrusions and the first and second housing protrusions may at least partially overlap each other in the vertical direction. Accordingly, the impact between the lens assembly and the second housing may be dispersed through the assembly protrusion and the housing protrusion, respectively.

Also, the first and second housing protrusions and the first and second lens assembly protrusions may not overlap in the vertical direction. The first and second assembly protrusions and the first and second housing protrusions may be arranged to be offset in the vertical direction. Accordingly, the impact reliability of the lens assembly and the second housing may be improved, and the first and second lens assemblies may easily and accurately move linearly along the optical axis.

Furthermore, the first trap unit DT1 according to the embodiment may include a first sub-trap unit DT1a disposed outside the first sub-housing protrusion 1232pr1a and a second sub-trap portion (DT1b) disposed outside the second sub-housing protrusion 1232pr1b.

The second trap unit DT2 may include a third sub-trap unit DT2a disposed outside the third sub-housing protrusion 1232pr2a and a fourth sub-trap unit DT2b disposed outside the fourth sub-housing protrusion 1232pr2b.

The inner surface may include a first region S1 and second regions S2. For example, the first inner surface 1232S1 may include the first region S1 and the second regions S2.

The first region S1 is a region between the first sub-housing protrusion 1232pr1a and the second sub-housing protrusion 1232pr1b. The second region S2 is a region located outside the first sub-housing protrusion 1232pr1a or outside the second sub-housing protrusion 1232pr1b.

That is, one or more second regions S2 may be provided. The following description is made based on two second regions S2. The plurality of second regions S2 may be arranged spaced apart in the horizontal direction. Further, the first region S1 may be disposed between the second regions S2 which are spaced apart from each other. A housing protrusion 1232h may be located in the first region S1. The first trap unit DT1 may be located in the second region S2.

Similarly, the second inner surface 1232S2 may include a first region S1 and second regions S2. In this case, the first region S1 is a region between the third sub-housing protrusion 1232pr2a and the fourth sub-housing protrusion 1232pr2b. The second region S2 is a region located outside the third sub-housing protrusion 1232pr2a or outside the fourth sub-housing protrusion 1232pr2b. Here, the first sub-housing protrusion 1232pr1a and the third sub-housing protrusion 1232pr2a may overlap in the vertical direction, and the second sub-housing protrusion 1232pr2a and the fourth sub-housing protrusion 1232pr2b may overlap in the vertical direction. Accordingly, the first and second regions of the second inner side 1232S2 may be partitioned by the first sub-housing protrusion and the second sub-housing protrusion. Furthermore, the first region and the second region of the first inner surface 1232S1 may correspond to the first region and the second region of the second inner surface 1232S2. For example, the first region and the second region of the first inner surface 1232S1 may overlap the first region and the second region of the second inner surface 1232S2 in the vertical direction.

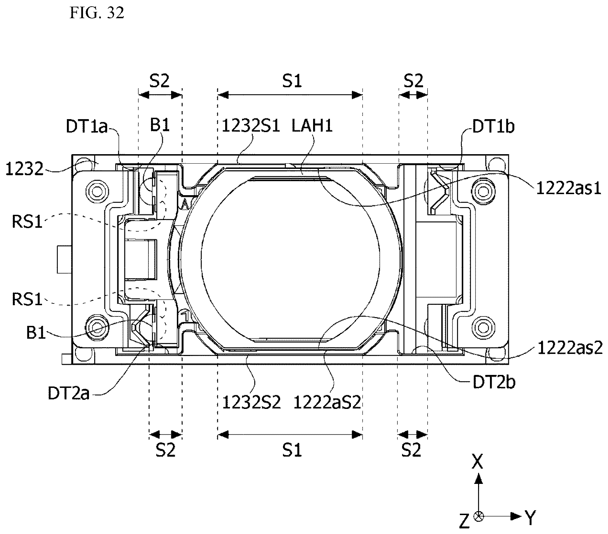

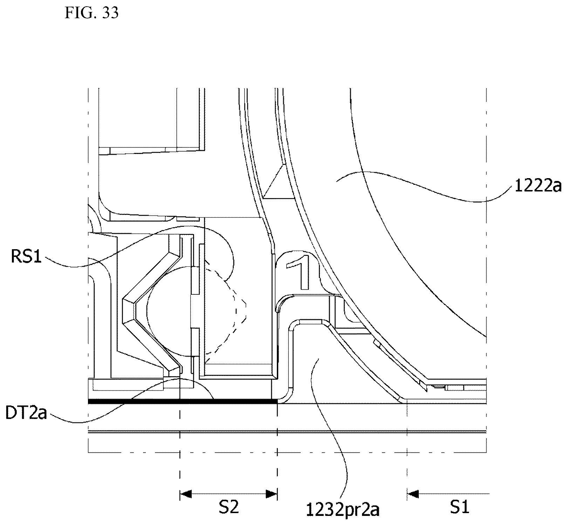

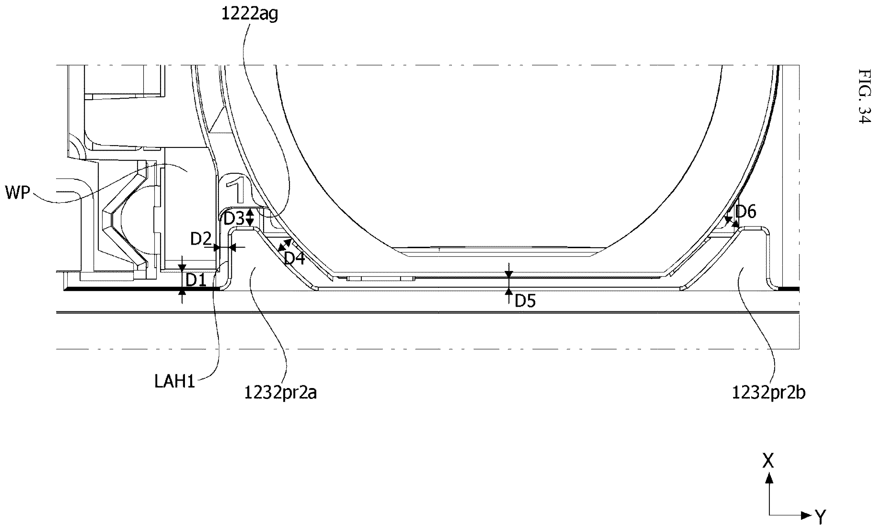

FIG. 32 is a view of a main barrel, a first lens assembly, a first ball, and a first yoke in the second camera actuator according to another embodiment, FIG. 33 is an enlarged view of a part of FIG. 32, and FIG. 34 is another enlarged view of FIG. 32.

Referring to FIGS. 32 to 34, the first lens assembly 1222a may include a first lens holder LAH1 that holds and couples a second lens group. The first lens holder LAH1 may be coupled to the second lens group. Furthermore, the first lens holder LAH1 may include a first lens hole for accommodating the second lens group. That is, a second lens group 1221b including one or more lenses may be disposed in the first lens hole.

The first guide unit may be disposed spaced apart on one side of the first lens holder LAH1. For example, the first guide unit G1 and the first lens holder LAH1 may be sequentially arranged in the second direction (Y-axis direction).

Further, the second lens assembly 1222b may include a second lens holder LAH2 that holds and couples a third lens group. Furthermore, the second lens holder LAH2 may include a second lens hole LH2 for accommodating the third lens group. That is, one or more lenses may be disposed in the second lens hole LH2.

The first lens assembly may include the first lens holder and a wing portion WP disposed on a side surface of the first lens holder. Further, the wing portion WP may face the first guide unit. In this case, a length in the optical axis direction of the wing portion WP may be greater than a length in the optical axis direction of the first lens holder LAH1. In the following description, the description of the second lens assembly can be applied to the description of the first lens assembly.

The first inner surface 1232S1 may face an upper surface 1222as1 of the first lens assembly 1222a. The second inner surface 1232S2 may face a lower surface 1222as2 of the first lens assembly 1222a. The first inner surface 1232S1 may be located above the upper surface 1222as1 of the first lens assembly 1222a. The second inner surface 1232S2 may be located below the lower surface 1222as2 of the first lens assembly 1222a.

The first region S1 may overlap the upper surface 1222as1 and the lower surface 1222as2 of the first lens assembly 1222a in the vertical direction.

The second regions S2 may overlap a first ball B1 or a first recess RS1 in the vertical direction.

The first sub-trap unit DT1a or the second sub-trap unit DT1b may be disposed in the second region S2 of the first inner surface 1232S1. The third sub-trap unit DT2a and the fourth sub-trap unit DT2b may be disposed in the second regions S2 of the second inner surface 1232S2.

The first housing protrusion and the second housing protrusion may overlap the first lens assembly (or second lens assembly) in the vertical or the horizontal direction. Particularly, the first lens assembly 1222a may include an assembly groove 1222ag facing the third sub-housing protrusion 1232pr2a (or first sub-housing protrusion). The assembly groove 1222ag may be located between the center of the first lens holder LAH1 and the wing portion WP.

A first separation distance D1 may be a vertical distance between the second region S2 and the first lens assembly 1222a. A second separation distance D2 may correspond to a separation distance (for example, minimum distance) between the first sub-housing protrusion (or third sub-housing protrusion 1232pr2a) and the wing portion WP. The second separation distance D2 may correspond to a separation distance between an outer surface OS of the first sub-housing protrusion (or third sub-housing protrusion 1232pr2a) and the wing portion WP.

A third separation distance D3 may be a separation distance between the assembly groove 1222ag and the first sub-housing protrusion (or third sub-housing protrusion 1232pr2a). The third separation distance D3 may be a separation distance between the assembly groove 1222ag and an extension surface (for example, an upper surface or a lower surface) of the first sub-housing protrusion (or the third sub-housing protrusion 1232pr2a).

A fourth separation distance D4 may be a separation distance between the first sub-housing protrusion (or third sub-housing protrusion 1232pr2a) and the first lens holder LAH1. The fourth separation distance D4 may be a separation distance between an inner surface ISF of the first sub-housing protrusion (or third sub-housing protrusion 1232pr2a) and the first lens holder LAH.

A fifth separation distance D5 may be a separation distance between the first region S1 and the first lens holder LAH1. For example, the fifth separation distance D5 may be a distance in the vertical direction between the first region S1 and the first lens holder LAH1. A sixth separation distance D6 may be a separation distance between the second sub-housing protrusion (or fourth sub-housing protrusion 1232pr2b) and the first lens holder LAH1.

In an embodiment, the first separation distance D1 may be greater than the second separation distance D2. With this configuration, when a collision occurs between the first lens assembly 1222a and the inner surface, an amount of impact in the second region S2 may not be greater than other regions of the inner surface. Thus, the occurrence of foreign matter in the second region S2 may be suppressed. Thus, most of the foreign matter may be captured by the trap unit on the second region S2 before the inflow of foreign matter toward a first guide or a first recess. In other words, the inflow of the foreign matter toward the first guide or the first recess may be suppressed.

The first separation distance D1 may be greater than the fifth separation distance D5. That is, even when foreign matter is generated in the first region S1 and moves outward by the force of gravity, the foreign matter may be captured by the trap unit before the inflow of foreign matter toward the first guide or the first recess. Thus, the driving accuracy and the reliability of the first camera actuator may be improved.

Furthermore, the second separation distance D2 may be greater or smaller than the third separation distance D3. The fourth separation distance D4 may be smaller than the first separation distance D1. Accordingly, impact absorption and guiding effects may be improved.

Furthermore, the fifth separation distance D5 may be smaller than the first, second, third, fourth, and sixth separation distances D1 to D4 and D6. Accordingly, the deterioration of optical performance may be suppressed and the phenomenon of the lens being broken may be suppressed. The sixth separation distance D6 may correspond to the fourth separation distance D4.

Referring to Table 3 below, the first to third cases may correspond to the structure of the second camera actuator according to a plurality of embodiments. The units of separation distance may be millimeters (mm).

A corresponds to the first separation distance D1. B corresponds to the second separation distance D2. C corresponds to the third separation distance D3. D corresponds to the fourth separation distance D4. E corresponds to the fifth separation distance D5. F corresponds to the sixth separation distance D6.

**[Table 3]**

| Point | A | B | C | D | E | F |
|---|---|---|---|---|---|---|
| First case | 180 | 110 | 200 | 110 | 90 | 110 |
| Second case | 120 | 110 | 380 | 90 | 90 | 90 |
| Third case | 170 | 110 | 100 | 105 | 90 | 105 |

Table 4 below shows contact force results upon drop for the first to third cases.

**[Table 4]**

| Axis | +Z | -Z | +X | -X | +Y | -Y |
|---|---|---|---|---|---|---|
| First case | 9.5(E) | 5.1(E) | 3.52(B) | 5.07(D) | 12.24(B,C) | 5.43(D,E) |
| Second case | 11.65(F) | 8.22(F) | 13.2(F) | 13.29(F) | 12.91(F) | 13.2(F) |
| Third case | 12.04(C) | 5.49(E) | 6.15(F) | 5.06(F) | 17.5(C) | 20.62(F) |

Table 5 below shows HID simulation results for the first to third cases.

**[Table 5]**

| Axis | +Z | -Z | +X | -X | +Y | -Y |
|---|---|---|---|---|---|---|
| First case | 2.07(E) | 1.75(E) | 0.88(D) | 1.92(B,C) | 0.99(E) | (outside) |
| Second case | 6.87(F) | 1.28(B) | 1.39(B) | 4.73(F) | (outside) | 0.57(E) |
| Third case | 3.39(F) | 2.24(B,C) | 0.72(B) | 2.03(B) | 0.61(E) | 1.39(B) |

Table 6 below shows actual REL (reliability) test results for the first to third cases.

**[Table 6]**

| Design | Number of particles |
|---|---|
| First case | 4 pcs |
| Second case | 33 pcs |
| Third case | 25 pcs |

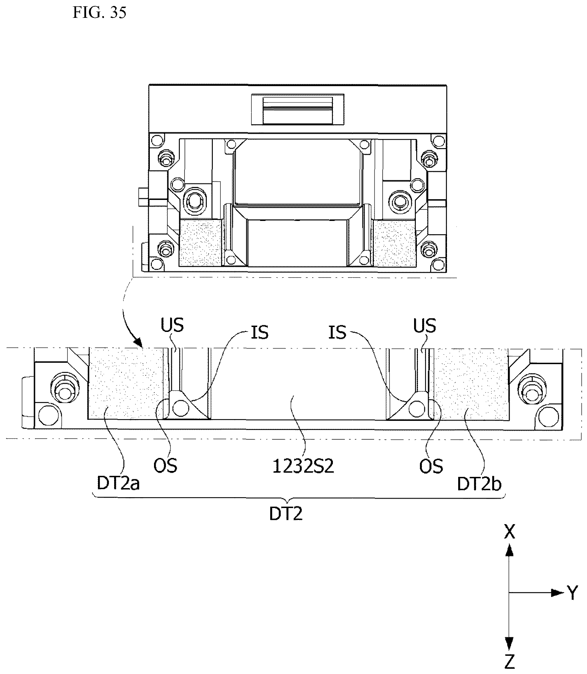

Referring to Tables 3 to 6, it can be seen that, when a separation distance is smaller than the first to sixth separation distances, an amount of impact increases and the occurrence of foreign matter or particles increases. Particularly, as described above, when the second camera actuator according to the embodiment has the above separation distances, the occurrence of foreign matter may significantly increase in a region having a separation distance other than the first separation distance. FIG. 35 is a perspective view of a main barrel and a trap unit of a second camera actuator according to still another embodiment.

Referring to FIG. 35, the second camera actuator according to still another embodiment may include a lens unit, a housing, a driving unit, a base unit, a substrate unit, and stoppers. Furthermore, a second camera actuator 1200 may further include a shield can (not shown), elastic units (not shown), a trap unit (not shown), and a coupling member (not shown). Further, the description of the main barrel, the trap unit, and the moving assembly of the second camera actuator described above can be equally applied, except for the following contents.

In this embodiment, the trap unit may extend to an outer surface of an adjacent housing protrusion. For example, a first sub-trap unit may extend to an outer surface of the first sub-housing protrusion described above. Further, a third sub-trap unit DT2a may extend to an outer surface OS of a third sub-housing protrusion. Accordingly, an amount of impact when an outer surface OS of the first sub-housing protrusion (or third sub-housing protrusion, 1232pr2a) comes into contact with a wing portion WP may be reduced. In addition, the inflow of foreign matter generated by the impact may be further reduced in regions with the third separation distance to the sixth separation distance.

In an embodiment, at least one of the first sub-trap unit, a second sub-trap unit, the third sub-trap unit, and a fourth sub-trap unit may extend to an outer surface of at least one of the first sub-housing protrusion, a second sub-housing protrusion, the third sub-housing protrusion, and a fourth sub-housing protrusion.

For example, the first sub-trap unit may extend to an outer surface of the first sub-housing protrusion. The second sub-trap unit may extend to an outer face of the second sub-housing protrusion. The third sub-trap unit DT2a may extend to an outer surface OS of a third sub-housing protrusion 1232pr2a. The fourth sub-trap unit may extend to an outer face of the fourth sub-housing protrusion.

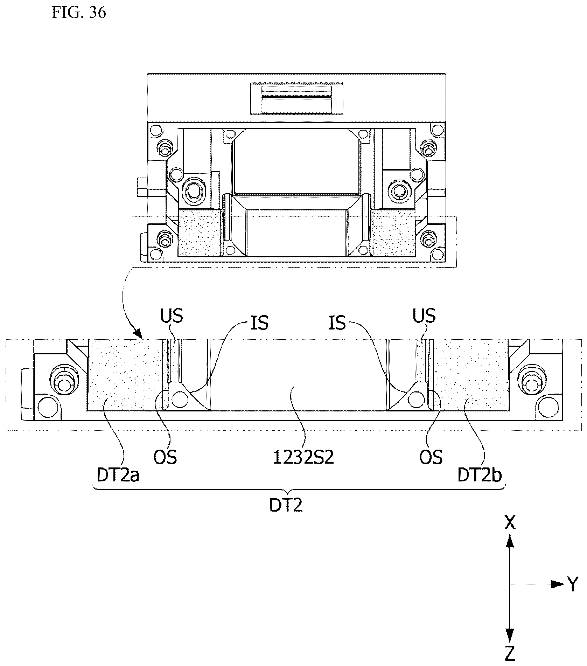

FIG. 36 is a perspective view of a main barrel and a trap unit of a second camera actuator according to yet another embodiment.

Referring to FIG. 36, the second camera actuator according to yet another embodiment may include a lens unit, a housing, a driving unit, a base unit, a substrate unit, and stoppers. Furthermore, the second camera actuator 1200 may further include a shield can (not shown), elastic units (not shown), a trap unit (not shown), and a coupling member (not shown). Further, the description of the main barrel, the trap unit, and the moving assembly of the second camera actuator described above can be equally applied, except for the following contents.

A first sub-trap unit may extend to an extension surface of a first sub-housing protrusion. Further, a third sub-trap unit may extend to an extension surface of a third sub-housing protrusion.

In an embodiment, at least one of the first sub-trap portion, a second sub-trap portion, the third sub-trap portion, and a fourth sub-trap portion may extend to an extension surface of at least one of the first sub-housing protrusion, a second sub-housing protrusion, the third sub-housing protrusion, and a fourth sub-housing protrusion.

For example, the first sub-trap unit may extend to an extension surface or a lower surface of the first sub-housing protrusion. The second sub-trap unit may extend to an extension surface or a lower surface of the second sub-housing protrusion. The third sub-trap unit DT2a may extend to an extension surface US or an upper surface of a third sub-housing protrusion 1232pr2a. The fourth sub-trap unit may extend to an extension surface or an upper surface of the fourth sub-housing protrusion.

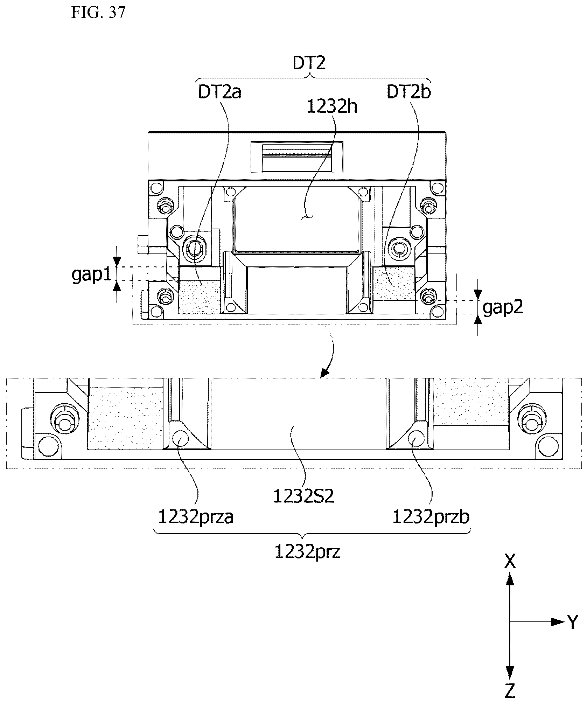

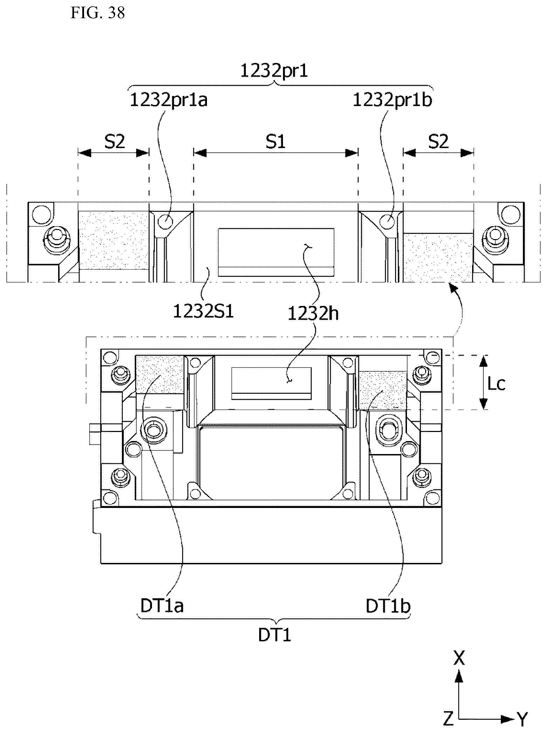

FIGS. 37 and 38 are perspective views of a main barrel and a trap unit of a second camera actuator according to yet another embodiment.

Referring to FIGS. 37 and 38, the second camera actuator according to yet another embodiment may include a lens unit, a housing, a driving unit, a base unit, a substrate unit, and stoppers. Furthermore, the second camera actuator 1200 may further include a shield can (not shown), elastic units (not shown), a trap unit (not shown), and a coupling member (not shown). Further, the description of the main barrel, the trap unit, and the moving assembly of the second camera actuator described above can be equally applied, except for the following contents.

In an embodiment, the first sub-trap unit may be disposed at least partially offset from the second sub-trap unit in the horizontal direction. For example, the first sub-trap unit and the second sub-trap unit may be located on the first inner surface. Here, at least a portion of the first sub-trap unit may be located at a front end of the second sub-trap unit or on a side in a direction opposite to the optical axis direction.

For example, the first sub-trap unit may be spaced a predetermined distance gap2 apart from a rear end portion of the first inner surface. Furthermore, the second sub-trap unit may be spaced a predetermined distance gap2 apart from a front end portion of the first inner surface.

Accordingly, the first sub-trap unit and the second sub-trap unit may overlap at least partially in the horizontal direction. Additionally, the first sub-trap unit and the second sub-trap unit may not overlap each other at least in some regions in the horizontal direction.

Furthermore, the third sub-trap unit may be disposed at least partially offset from the fourth sub-trap unit in the horizontal direction. For example, the third sub-trap unit and the fourth sub-trap unit may be located on the second inner surface. Here, at least a portion of the third sub-trap unit may be located on a front end of the fourth sub-trap unit and on a side in a direction opposite to the optical axis direction.

For example, the third sub-trap unit may be spaced a predetermined distance gap1 apart from a rear end portion of the second inner surface. Additionally, the fourth sub-trap unit may be spaced a predetermined distance gap1 apart from a front end portion of the second inner surface.

Accordingly, the third sub-trap unit and the fourth sub-trap unit may overlap at least partially in the horizontal direction. Additionally, the third sub-trap unit and the fourth sub-trap unit may not overlap each other at least in some regions in the horizontal direction.

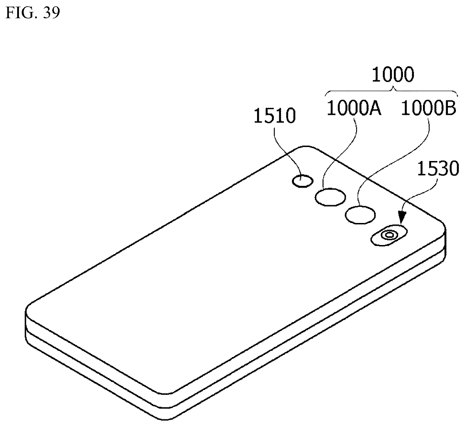

FIG. 39 is a perspective view of a mobile terminal to which the camera module according to the embodiment is applied.

As shown in FIG. 39, a mobile terminal 1500 in the embodiment may include a camera module 1000, a flash module 1530, and an auto-focus device 1510 provided on a rear surface thereof.

The camera module 1000 may include an image capturing function and an auto-focus function. For example, the camera module 1000 may include an auto-focus function using an image.

The camera module 1000 processes image frames of still or moving images obtained by an image sensor in a capturing mode or a video call mode.

The processed image frames may be displayed on a predetermined display unit and stored in a memory. A camera (not shown) may also be disposed on the front surface of a body of a mobile terminal.

For example, the camera module 1000 may include a first camera module 1000A and a second camera module 1000B, and OIS along with an AF or zoom function may be implemented by the first camera module 1000A.

The flash module 1530 may include a light-emitting element that emits light therein. The flash module 1530 may be operated by the operation of the camera of the mobile terminal or through the user's control.

The auto-focus device 1510 may include one of packages of surface-light-emitting laser devices as a light-emitting unit.

The auto-focus device 1510 may include an auto-focus function using a laser. The auto-focus device 1510 may be mainly used in conditions where it is difficult to use the auto-focus function using the image of the camera module 1000, for example, in a close range of 10 m or less or in a dark environment.

The auto-focus device 1510 may include a light emitting unit including a vertical cavity surface emitting laser (VCSEL) semiconductor device and a light receiving unit that converts light energy into electrical energy, such as a photodiode.

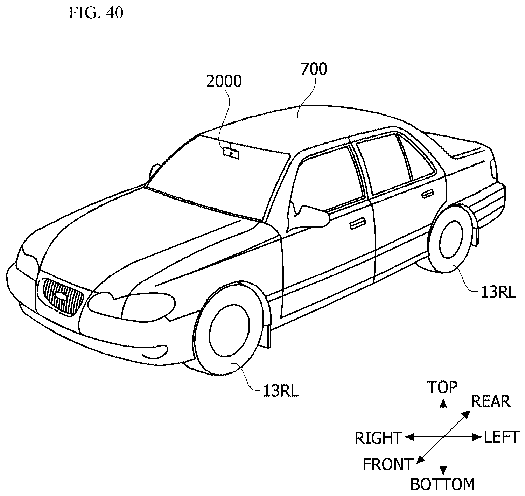

FIG. 40 is a perspective view of a vehicle to which the camera module according to the embodiment is applied.

For example, FIG. 40 is an exterior view of the vehicle including a vehicle driving assistance device to which the camera module 1000 according to the embodiment is applied.

Referring to FIG. 40, a vehicle 700 in the embodiment may include wheels 13FL and 13FR that rotate by a power source and a predetermined sensor. The sensor may be, but is not limited to, a camera sensor 2000.

The camera sensor 2000 may be a camera sensor to which the camera module 1000 according to the embodiment is applied. The vehicle 700 in the embodiment may obtain image information through the camera sensor 2000 that captures a front image or a surrounding image and use the image information to determine a lane non-identification situation and create a virtual lane when the lane is not identified.

For example, the camera sensor 2000 may capture the front of the vehicle 700 to obtain the front image and a processor (not shown) may analyze objects included in the front image to obtain image information.

For example, when objects such as lanes, adjacent vehicles, traffic obstructions, and center dividers, curbs, and street trees which correspond to indirect road markings are captured in the image captured by the camera sensor 2000, the processor may detect these objects and include information regarding these objects in the image information. At this time, the processor may obtain distance information to an object detected through the camera sensor 2000 to further supplement the image information.

The image information may be information regarding an object captured in an image. The camera sensor 2000 may include an image sensor and an image processing module.

The camera sensor 2000 may process still images or moving images obtained by an image sensor (for example, a CMOS or a CCD).

The image processing module may process still images or moving images obtained through an image sensor, extract necessary information, and transmit the extracted information to the processor.

At this time, although the camera sensor 2000 may include a stereo camera to improve the measurement accuracy of the object and secure more information such as the distance between the vehicle 700 and the object, the present invention is not limited thereto.

Although the embodiments have been mainly described above, these are merely examples and are not intended to limit the present invention, and it can be seen by those skilled in the art that various modifications and applications not exemplified herein are possible without departing from the essential characteristics of the present invention. For example, each of the components specifically shown in the embodiments may be modified and implemented. Further, it should be interpreted that differences related to the modifications and the applications are included in the scope of the present invention defined by the appended claims.

## Claims

1. A camera actuator comprising:
a housing;
a first lens assembly which moves in an optical axis direction in the housing;
a driving unit which moves the first lens assembly; and
a first stopper which is disposed on a first inner wall of the housing,
wherein the first stopper includes a 1-1 stopper disposed on one side of the first inner wall of the housing and a 1-2 stopper disposed on the other side of the first inner wall of the housing, and
when the first lens assembly moves, both the 1-1 stopper and the 1-2 stopper come into contact with the first lens assembly.

2. The camera actuator of claim 1, wherein the 1-1 stopper and the 1-2 stopper are arranged spaced apart in a direction perpendicular to the optical axis direction.

3. The camera actuator of claim 1, wherein the first lens assembly includes:
an accommodating portion which has a lens accommodated therein;
a guiding unit which comes into contact with the accommodating portion and in which a ball unit is located; anda lens protrusion portion which comes into contact with the accommodating portion and corresponds to the guiding unit.

4. The camera actuator of claim 3, wherein the guiding unit is located on one side of the accommodating portion, and
the lens protrusion portion is located on the other side surface of the accommodating portion.

5. The camera actuator of claim 3, wherein a length of the lens protrusion portion in a direction perpendicular to the optical axis direction is smaller than a length of the guiding unit in the direction perpendicular to the optical axis direction.

6. The camera actuator of claim 3, wherein the guiding unit and the lens protrusion portion have different distances from the first inner wall of the housing in the optical axis direction.

7. The camera actuator of claim 3, wherein a distance between the 1-1 stopper and the guiding unit of the first lens assembly corresponds to a distance between the 1-2 stopper and the lens protrusion portion.

8. The camera actuator of claim 1, wherein the first stopper includes a 1-3 stopper disposed on the first inner wall of the housing in the housing.

9. The camera actuator of claim 8, wherein the 1-1 stopper, the 1-2 stopper, and the 1-3 stopper are arranged to be offset in a direction perpendicular to the optical axis direction.

10. The camera actuator of claim 8, comprising a second lens assembly which moves in the optical axis direction in the housing,
wherein, when the second lens assembly moves in the optical axis direction, the 1-3 stopper comes into contact with the second lens assembly.
